# EUROPÄISCHE PATENTSCHRIFT

(11) **EP 3 551 514 B1**
(45) Veröffentlichungstag und Bekanntmachung des Hinweises auf die Patenterteilung: **16.09.2020**
(21) Anmeldenummer: 17791006.4
(22) Anmeldetag: 17.10.2017
(51) Int. Cl.: B60T 11/16

(54) **HAUPTBREMSZYLINDERANORDNUNG MIT POSITIONSGEBERELEMENT UND KOPPLUNGSANORDNUNG HIERFÜR**
MASTER CYLINDER WITH POSITION SENSING ELEMENT AND COUPLING
MAÎTRE CYLINDRE AVEC CAPTEUR DE POSITION ET ACCOUPLEMENT ENTRE LES DEUX.

(30) Priorität: 06.12.2016 DE 102016014483
(43) Veröffentlichungstag der Anmeldung: 16.10.2019
(73) Patentinhaber: Lucas Automotive GmbH, 56070 Koblenz (DE)
(72) Erfinder: GEIDER, Michael, 56220 Urmitz (DE)
(86) Internationale Anmeldenummer: PCT/EP2017/076420
(87) Internationale Veröffentlichungsnummer: WO 2018/103930

(56) Entgegenhaltungen:
- DE-A1-102007 032 756
- DE-C1- 3 928 874
- FR-A1- 2 535 662
- GB-A- 2 128 279

## Beschreibung

### Technisches Gebiet

Die vorliegende Erfindung betrifft allgemein das technische Gebiet von Hauptbremszylinderanordnungen und insbesondere Hauptbremszylinderanordnungen für Kraftfahrzeugbremsanlagen. Genauer gesagt betrifft die vorliegende Erfindung eine Hauptbremszylinderanordnung, bei der eine Bremspedalbetätigung mittels eines Positionsgeberelements erfassbar ist.

### Stand der Technik

Lösungen zur Erfassung einer Bremspedalbetätigung sind aus dem Stand der Technik bekannt. Eine solche Erfassung ist beispielsweise erforderlich, um das Vorliegen eines Fahrerwunsches hinsichtlich einer Fahrzeugbremsung und gegebenenfalls auch das gewünschte Ausmaß der Fahrzeugbremsung zu erfassen. Diese Information kann verwendet werden, um die bei einem fahrerentkoppelten Bremsbetrieb bereitzustellenden Bremskräfte zu ermitteln (Brake-By-Wire). Derartige Bremskräfte werden typischerweise über einen elektromechanischen Bremsaktuator erzeugt.

In diesem Zusammenhang ist es ferner bekannt, ein Positionsgeberelement bereitzustellen, das nach Maßgabe der Bremspedalbetätigung verlagerbar ist, wobei diese Verlagerung mittels einer Erfassungseinheit erfasst wird. Hierfür kommen beispielsweise stabförmige Positionsgeberelemente in Betracht, die mit dem Kolben eines Hauptbremszylinders für eine gemeinsame Verlagerung gekoppelt sind.

Beispiele hierfür finden sich in den Dokumenten DE 10 2008 020 934 A1, DE 37 23 842 A1 oder DE 37 23 916 A1.

Ferner offenbart die Druckschrift DE 39 28 874 C1 eine hydraulischen Zweikreis-Bremsanlage, deren Bremsgerät einen Vorderachs-Bremskreis und einen Hinterachs-Bremskreis umfasst, wobei die Bremskreise je einen zugeordneten Ausgangsdruckraum haben. Die Druckräume sind beweglich durch Hauptzylinderkolben begrenzt, wobei den Hauptzylinderkolben je ein Positionsgeber zugeordnet ist. Zur Verarbeitung der Positionsgeber-Ausgangssignale ist ein elektronisches Steuergerät vorgesehen, welches wiederum Steuersignale für eine Ventilanordnung abgibt. Das elektronische Steuergerät umfasst weiter einen Komparator, welcher anhand der Positionsgeber-Ausgangssignale die Positionen der Kolben des Bremsgeräts miteinander vergleicht.

Es hat sich jedoch gezeigt, dass es bei den bekannten Lösungen leicht zu Fehlfunktionen kommen kann und dass eine gewünschte Zuverlässigkeit oft nicht erreicht wird.

### Kurzer Abriss

Es ist eine Hauptbremszylinderanordnung anzugeben, die eine zuverlässige Erfassung einer Bremspedalbetätigung ermöglicht.

Hierfür wird eine Hauptbremszylinderanordnung für eine Kraftfahrzeugbremsanlage bereitgestellt, umfassend wenigstens eine Kolbenanordnung mit:
- einer Druckkolbeneinheit, die entlang einer Verlagerungsachse verlagerbar ist und gemeinsam mit einer Gehäuseanordnung der Hauptbremszylinderanordnung eine Druckkammer begrenzt,
- einem Krafteingangsglied, das nach Maßgabe einer Bremspedalbetätigung verlagerbar ist und mit der Druckkolbeneinheit für eine gemeinsame Verlagerung gekoppelt oder koppelbar ist.

Die Hauptbremszylinderanordnung umfasst ferner:
- ein Positionsgeberelement, das nach Maßgabe einer Betätigung des Krafteingangsgliedes verlagerbar ist;
- eine Erfassungseinheit, die dazu ausgebildet ist, eine Verlagerung des Positionsgeberelements zu erfassen; und
- eine Kopplungsanordnung, die dazu ausgebildet ist, das Positionsgeberelement mit wenigstens einem Element der Kolbenanordnung entlang der Verlagerungsachse im Wesentlichen starr zu koppeln, wobei die Kopplungsanordnung ferner dazu eingerichtet ist, eine Rotation des wenigstens einen Elements der Kolbenanordnung relativ zu dem Positionsgeberelement um die Verlagerungsachse zuzulassen.

Die Druckkolbeneinheit kann einen Kolben zum Beispiel in Form eines Druck- und/oder Bremskolbens umfassen, der in einer Zylinderbohrung der Hauptbremszylinderanordnung verlagerbar geführt ist. Die Gehäuseanordnung kann ein Zylindergehäuse der Hauptbremszylinderanordnung umfassen. Die Druckkolbeneinheit und die Zylinderbohrung (und/oder das Zylindergehäuse) können gemeinsam die Druckkammer begrenzen. Nach Maßgabe einer Verlagerung des Kolbens kann das Volumen der Druckkammer variiert werden, sodass in bekannter Weise ein Druck auf den Pedalgegenkraftsimulator oder bei einem Systemversagen direkt ein Bremsdruck in einem mit der Hauptbremszylinderanordnung gekoppelten hydraulischen Bremskreislauf verändert werden kann.

Es versteht sich, dass die Hauptbremszylinderanordnung auch mehrere solcher Druckkolbeneinheiten umfassen kann, die beispielsweise nach Tandembauart angeordnet sind. Diese können auch eine entsprechende Mehrzahl von Druckkammern definieren.

Die Druckkolbeneinheit kann mehrteilig aufgebaut sein. Beispielsweise kann die Druckkolbeneinheit einen im Wesentlichen zylindrisches Kolben umfassen. Dieser kann zumindest abschnittsweise unmittelbar in die Druckkammer hinein und/oder aus dieser heraus verlagerbar sein. An dem Kolben können weitere Elemente der Druckkolbeneinheit angebracht sein, beispielsweise eine Aufnahmebuchse für einen Verbindungsabschnitt des Krafteingangsgliedes und/oder ein Mitnehmerelement (zum Beispiel eine Mitnehmerscheibe). Diese Elemente können zumindest teilweise in einer zylindrischen Sacklochbohrung oder Ausnehmung in dem Kolben angeordnet sein. Das Mitnehmerelement kann ferner allgemein radial von dem Kolben hervorstehen, zum Beispiel um einen dem Positionsgeberelement axial gegenüberliegenden Bereich der Druckkolbeneinheit zu bilden.

Das Krafteingangsglied kann als allgemein zylindrisches Element und/oder kolbenartig ausgebildet sein. Das Koppeln mit der Druckkolbeneinheit kann kraftschlüssig und/oder formschlüssig erfolgen (beispielsweise durch Verstemmen oder gemeinsames in Anlage Bringen). Auch mit dem Bremspedal kann ein zumindest mittelbares mechanisches Koppeln erfolgen. Allgemein kann das Krafteingangsglied ebenfalls entlang der Verlagerungsachse verlagerbar sein, wobei es eine Bremspedalbetätigung in eine Verlagerung der Druckkolbeneinheit entlang der Verlagerungsachse umsetzen kann.

Das Positionsgeberelement kann als ein allgemein langgestrecktes und/oder zylindrisches Element ausgebildet sein. Gemäß einem Beispiel ist das Positionsgeberelement im Wesentlichen stabförmig und/oder zumindest abschnittsweise mit einem gerundeten, ovalen oder kreisrunden Querschnitt ausgebildet. Das Positionsgeberelement kann auch als Positionsgeberstab oder Sensorstift bezeichnet werden. Übergeordnet kann das Positionsgeberelement ein metallisches und insbesondere ein magnetisches Material umfassen und/oder allgemein dazu eingerichtet sein, mit der Erfassungseinheit für eine Positionserkennung zu wechselwirken. Hierzu kann die Erfassungseinheit einen Magnetfeldsensor umfassen.

Das Positionsgeberelement kann mit der Druckkolbeneinheit oder dem Krafteingangsglied koppelbar oder gekoppelt sein, um gemeinsam mit diesen verlagert zu werden. Dies kann über die nachfolgend erläuterte Kopplungsanordnung erfolgen. Die Verlagerung des Positionsgeberelements kann ebenfalls im Wesentlichen entlang der Verlagerungsachse erfolgen. Insbesondere kann das Positionsgeberelement entlang einer von der Verlagerungsachse beabstandeten aber hierzu parallelen Achse verlagert werden.

Die Erfassungseinheit kann die Bewegungen des Positionsgeberelements mittels einer geeigneten Sensoreinheit erfassen, beispielsweise einer Magnetfeldsensoreinheit, umfassend einen Hall-Sensor. Die Erfassungseinheit kann ferner von einer elektromechanischen Bremsaktuatoreinheit umfasst sein oder mit dieser wechselwirken. Insbesondere kann die Erfassungseinheit Bestandteil einer Sensoreinheit zum Erfassen eines Betriebsparameters der Bremsaktuatoreinheit sein, wie beispielsweise einer aktuellen Position eines Elektromotors dieser Einheit. Die Erfassungseinheit kann allgemein dazu ausgebildet sein, nach Maßgabe der Verlagerung des Positionsgeberelements Signale zu generieren. Diese können von einer Steuereinheit ausgewertet werden. Die Steuereinheit kann von der Erfassungseinheit umfasst oder zumindest hiermit verbindbar sein.

Die Kopplungsanordnung kann allgemein eine zwischen dem Positionsgeberelement und dem wenigstens einem Element der Kolbenanordnung zwischengeschaltete Einheit bilden. Dies kann insbesondere ein mechanisches Zwischenschalten oder Zwischenpositionieren einschließen, sodass die Kolbenanordnung und das Positionsgeberelement mittelbar über die Kopplungsanordnung verbunden sind. Abseits der Kopplungsanordnung können im Wesentlichen keine weiteren mittelbaren und/oder unmittelbaren mechanischen Kopplungen zwischen dem Positionsgeberelement und der Kolbenanordnung vorgesehen sein.

Zusätzlich oder alternativ kann eine Kraftübertragung zwischen der Kolbenanordnung und dem Positionsgeberelement zur gemeinsamen Verlagerung im Wesentlichen über die Kopplungsanordnung erfolgen und insbesondere im Wesentlichen ausschließlich über die Kopplungsanordnung.

Die Kopplungsanordnung kann eine von der Kolbenanordnung separat ausgebildete und/oder separat handhabbare Baugruppe umfassen und/oder bilden. Diese kann mit dem wenigstens einen Element der Kolbenanordnung verbindbar und beispielsweise unmittelbar daran befestigbar sein.

Beispielsweise kann die Kopplungsanordnung ein separat ausgebildetes Element umfassen, das mit der Kolbenanordnung verbindbar ist und das optional wenigstens einen der nachstehend erläuterten ersten und zweiten Abschnitte umfasst. Zusätzlich oder alternativ kann die Kopplungsanordnung bzw. dessen etwaiges separat ausgebildetes Element einstückig ausgebildet und insbesondere aus einem Blechmaterial hergestellt sein (zum Beispiel als Blechbiege- oder Stanzteil).

Das axial starre Koppeln von Positionsgeberelement und Kolbenanordnung kann ein Begrenzen oder im Wesentlichen vollständiges Unterdrücken einer axialen Relativbewegung zwischen den genannten Elementen entlang der Verlagerungsachse betreffen. Anders ausgedrückt kann die Kopplungsanordnung derart ausgebildet sein, dass das Positionserfassungselement und die Kolbenanordnung gemeinsam entlang der Verlagerungsachse bewegbar sind, ohne dass es zu signifikanten axialen Relativbewegungen oder einem axialen Spiel zwischen diesen Elementen kommt.

Hingegen kann die Kopplungsanordnung dazu ausgebildet sein, eine relative Rotation zwischen Positionsgeberelement und Kolbenanordnung um die Verlagerungsachse zu ermöglichen. Die Kolbenanordnung kann bei einer Rotation um die Verlagerungsachse also sozusagen relativ zu der Kopplungsanordnung verrutschen, ohne dass es zu einer signifikanten Übertragung dieser Rotationsbewegung auf das Positionsgeberelement kommt, womit eine rotationsbedingte Querkraftbelastung auf das Positionsgeberelement reduziert bzw. verhindert wird.

Anders ausgedrückt kann die Kopplungsanordnung das Positionsgeberelement und die Kolbenanordnung im Wesentlichen rotatorisch entkoppeln, wobei dies insbesondere eine Rotation um die Verlagerungsachse betrifft. Die Kopplungsanordnung kann also allgemein dazu ausgebildet sein, im Wesentlichen lediglich axiale Kräfte zwischen den genannten Elementen zu übertragen, nicht jedoch Rotationskräfte um die Verlagerungsachse.

Wie nachfolgend näher ausgeführt, kann die Kopplungsanordnung zum Koppeln der relevanten Elemente insbesondere mit einem Mitnehmerelement der Druckkolbeneinheit und/oder einem freien Ende des Positionsgeberelements wechselwirken.

Gemäß einer weiteren Ausführungsform umfasst die Kopplungsanordnung einen ersten Abschnitt, der dazu ausgebildet ist, die Kopplungsanordnung mit dem wenigstens einen Element der Kolbenanordnung zu koppeln. Das Koppeln kann ein unmittelbares und/oder mechanisches Koppeln betreffen. Der erste Abschnitt kann insbesondere axial mit dem Element der Kolbenanordnung koppelbar sein, insbesondere axial starr. Um die Verlagerungsachse betrachtet kann der erste Abschnitt hingegen von der Kolbenanordnung rotatorisch entkoppelt sein, trotz einer etwaigen axial starren Kopplung hiermit.

Mit anderen Worten kann der erste Abschnitt den rotatorischen Freiheitsgrad zwischen dem Positionsgeberelement und dem Element der Kolbenanordnung zumindest anteilig, größtenteils oder im Wesentlichen vollständig bereitstellen. Zusätzlich oder alternativ kann der erste Abschnitt die axial starre Kopplung zwischen dem Positionsgeberelement und dem Element der Kolbenanordnung zumindest anteilig, größtenteils oder im Wesentlichen vollständig bereitstellen.

Der erste Abschnitt kann ferner dazu ausgebildet sein, mit einer Kopplungsfläche der Kolbenanordnung zu wechselwirken und insbesondere relativ zu dieser abzugleiten. Die Kopplungsfläche kann von einem Kopplungsbereich der Kolbenanordnung umfasst sein oder diesen bilden. Das Abgleiten kann ein Abgleiten entlang und/oder an der Kopplungsfläche betreffen (insbesondere wobei die Kopplungsfläche bewegt wird und der erste Abschnitt im Wesentlichen ortsfest bleibt). Zusätzlich oder alternativ kann dies ein relatives Abgleiten in Umfangsrichtung des wenigstens einen Elements der Kolbenanordnung betreffen, wobei die Umfangsrichtung um die Verlagerungsachse verlaufen kann.

Im Rahmen der vorliegenden Erfindung können sich die Begriffe axial und radial auf die Verlagerungsachse beziehen. Die Umfangsrichtung kann sich hingegen auf eine Richtung bzw. Erstreckung um die Verlagerungsachse beziehen, insbesondere innerhalb einer zu dieser Achse orthogonalen Ebene.

Die Kopplungsfläche kann beispielsweise an einer Außenumfangsfläche der Druckkolbeneinheit bereitgestellt sein. Dies kann insbesondere eine Außenumfangsfläche des Kolbens und/oder eines etwaigen Mitnehmerelements betreffen. Die Kopplungsfläche kann einen ringförmigen Bereich definieren. Dieser kann sich Wesentlichen parallel zu sowie um die Verlagerungsachse herum erstrecken. Die Kopplungsfläche kann auch relativ zu der Verlagerungsachse geneigt sein, also zum Beispiel einen kegelförmigen Ringabschnitt definieren. Allgemein kann die Kopplungsfläche im Wesentlichen kontinuierlich und/oder glatt verlaufen. Zum Beispiel kann die Kopplungsfläche im Wesentlichen frei von Bereichen oder Strukturen sein, die ein etwaiges relatives Abgleiten des ersten Abschnitts behindern könnten.

Die Kopplungsfläche kann in einem Bereich der Kolbenanordnung ausgebildet sein, der einen größeren Durchmesser aufweist als ein die Druckkammer begrenzender Abschnitt der Kolbenanordnung. Der Bereich kann einem freien Ende des Positionsgeberelements axial gegenüberliegen, zum Beispiel um eine Kopplung hiermit zu erleichtern. Die Kopplungsfläche kann an einer Außenumfangsfläche des genannten Bereichs ausgebildet sein.

Ferner kann der genannte durchmesservergrößerte Bereich durch eine Mitnehmerscheibe oder ein vergleichbares Mitnehmerelement bereitgestellt sein, das über den Durchmesser der Kolbenanordnung radial hervorsteht. Übergeordnet kann die Kopplungsfläche an einem Mitnehmerelement ausgebildet sein, das an einem von der Druckkammer abgewandten Endbereich der Kolbenanordnung angeordnet ist. Das Mitnehmerelement kann als Mitnehmerscheibe ausgebildet sein und/oder eine Anlagefläche für eine Rückstellfeder der Kolbenanordnung bereitstellen. Das Mitnehmerelement kann ferner ein axiales Abschlusselement der Kolbenanordnung bilden (also zum Beispiel einen axialen Endbereich hiervon definieren). Ferner kann das Mitnehmerelement einer Eingangsöffnung für das Krafteingangsglied zugewandt sein kann und/oder dieser axial gegenüberliegen.

Eine Weiterbildung sieht vor, dass zumindest einer von dem erstem Abschnitt und der Kopplungsfläche mit einer Ausnehmung ausgebildet ist, in die der jeweils andere von dem erstem Abschnitt und der Kopplungsfläche zumindest teilweise aufgenommen ist, und insbesondere, wobei die Ausnehmung eine in Umfangsrichtung verlaufende Nut umfasst. Die Ausnehmung kann eine Führungsachse für ein Abgleiten der Kopplungsanordnung definieren und/oder allgemein eine Führungsachse für die Relativrotation zwischen Positionsgeberelement und Kolbenanordnung mittels der Kopplungsanordnung. Die Ausnehmung kann allgemein langgestreckt sein und/oder axiale Relativbewegungen zwischen dem ersten Abschnitt und der Kopplungsfläche im Wesentlichen unterdrücken. Anders ausgedrückt kann die Ausnehmung dazu eingerichtet sein, den ersten Abschnitt und die Kopplungsfläche im Wesentlichen axial spielfrei miteinander zu verbinden. Andererseits kann eine Rotation in Umfangsrichtung (bzw. um die Verlagerungsachse) zugelassen werden, insbesondere durch ein relatives Abgleiten zwischen der Ausnehmung und dem darin aufgenommenen Abschnitt.

Gemäß einer Variante ist die Ausnehmung als in Umfangsrichtung verlaufende Nut bereitgestellt, welche insbesondere durchgängig beziehungsweise vollständig umlaufend ausgebildet sein kann, sodass eine vollständige Rotation um die Verlagerungsachse ermöglicht wird. Anders ausgedrückt kann die Ausnehmung derart gestaltet sein, dass eine Relativverdrehung von wenigstens 360° um die Verlagerungsachse zwischen dem ersten Abschnitt und der Kopplungsfläche ermöglicht wird. Beispielsweise kann die Ausnehmung eine im Wesentlichen ringförmige Vertiefung definieren.

In dem Fall, dass die Ausnehmung in dem ersten Abschnitt ausgebildet ist, kann es sich um eine innen umlaufende Ausnehmung oder Nut handeln, die beispielsweise der Verlagerungsachse zugewandt ist. Ist die Ausnehmung hingegen in der Kopplungsfläche ausgebildet, kann es sich um eine außen umlaufende Ausnehmung oder Nut handeln, die beispielsweise von der Verlagerungsachse abgewandt ist.

Zur Kopplung mit der Ausnehmung kann das jeweils andere Element von erstem Abschnitt und Kopplungsfläche einen vorspringenden Bereich umfassen, insbesondere radial vorspringend. Dieser kann mit der Ausnehmung in Eingriff bringbar sein und entlang dieser geführt werden beziehungsweise abgleiten (insbesondere in Umfangsrichtung und/oder um die Verlagerungsachse). Dies erfolgt vorzugsweise unter einer axial spielfreien Kopplung zwischen diesen Elementen. Mit anderen Worten kann die Ausnehmung allgemein einen axialen Formschluss zwischen der Kolbenanordnung und der Kopplungsanordnung bereitstellen.

Eine Weiterbildung sieht vor, dass der erste Abschnitt unter einer elastischen Deformation mit der Kolbenanordnung gekoppelt oder koppelbar ist. Der erste Abschnitt kann somit auch im angebrachten Zustand einen gewissen elastischen Deformationsgrad aufrechterhalten. Infolge elastischer Rückstellkräfte kann der erste Abschnitt in definierter Weise an der Kolbenanordnung gehalten werden. Beispielsweise können hierüber definierte Reibungskräfte zwischen den genannten Elementen eingestellt werden, insbesondere um eine etwaige rotatorische Relativbewegung hier zwischen zu beeinflussen. Ebenso kann aber vorgesehen sein, dass die elastische Deformation lediglich im Montageprozess auftritt und nach erfolgtem Zusammenbau die Kopplungsanordnung im Wesentlichen in einem undeformierten Zustand mit der Kolbenanordnung gekoppelt ist.

Der erste Abschnitt kann einen ringförmigen Bereich umfassen oder als ein solcher ausgebildet sein, wobei der ringförmige Bereich einen Winkelbereich von wenigstens ca. 120° überspannt. Der ringförmige Bereich kann sich um die Verlagerungsachse und/oder eine Außenumfangsfläche der Kopplungsanordnung erstrecken. Der Winkelbereich kann sich auf einen Winkelbereich um die beziehungsweise bezogen auf die Verlagerungsachse beziehen. Der ringförmige Bereich kann vollständig oder nahezu geschlossen sein. Beispielsweise kann der ringförmige Bereich eine Umfangsöffnung von nicht mehr als ca. 180°, nicht mehr als ca. 90° oder nicht mehr als ca. 30° umfassen. Anders ausgedrückt kann der Winkelbereich wenigstens ca. 180°, ca. 270° oder ca. 330° überspannen.

Die Kopplungsanordnung kann einen zweiten Abschnitt umfassen, der dazu ausgebildet ist, die Kopplungsanordnung mit dem Positionsgeberelement zu koppeln. Der zweite Abschnitt kann im Wesentlichen unmittelbar in den ersten Abschnitt übergehen oder mit diesem zumindest teilweise oder vollständig überlappen. Der erste und/oder der zweite Abschnitt können jeweils auch mehrere einzelne Bereiche umfassen, die nicht unmittelbar zusammenhängen. Beispielsweise können mehrere Bereiche an der Kopplungsanordnung bereitgestellt sein, die gemeinsam als zweiter Abschnitt der Kopplungsanordnung zum Koppeln mit dem Positionsgeberelement wirken. Gleiches gilt für den ersten Abschnitt.

Der zweite Abschnitt kann von dem ersten Abschnitt abgewinkelt sein und/oder von diesem hervorstehen. Beispielsweise kann der zweite Abschnitt axial und/oder radial von dem ersten Abschnitt hervorstehen. Gemäß einer Variante erstreckt sich der zweite Abschnitt ausgehend von dem ersten Abschnitt in Richtung des Positionsgeberelements und/oder der Druckkammer der Hauptbremszylinderanordnung. Der erste und zweite Abschnitt können ferner von einem einstückigen Bauteil umfasst sein bzw. gebildet werden.

Gemäß einer Variante ist der zweite Abschnitt dazu ausgebildet, einen Formschluss mit dem Positionsgeberelement zu bilden. Hierzu kann der zweite Abschnitt zum Beispiel eine Hinterschneidung, einen Verrastungsbereich, einen Klemmabschnitt und/oder eine Öffnung bereitstellen, um mit dem Positionsgeberelement zu wechselwirken und insbesondere hiermit in Eingriff zu gelangen. In diesem Zusammenhang kann der Formschluss insbesondere eine axiale Relativbewegung von Kopplungsanordnung und Positionsgeberelement begrenzen oder im Wesentlichen vollständig unterdrücken. Anders ausgedrückt kann der Formschluss derart bereitgestellt werden, dass die Kopplung von Positionsgeberelement und Kopplungsanordnung im Wesentlichen axial spielfrei und/oder axial unbeweglich erfolgt. Der Formschluss kann auch radial und/oder in Umfangs- bzw. Rotationsrichtung um die Verlagerungsachse erfolgen.

Zusätzlich oder alternativ kann der zweite Abschnitt dazu ausgebildet sein, einen Kraftschluss mit dem Positionserfassungselement zu bilden. Dies kann beispielsweise dadurch erreicht werden, dass eine Kopplung des zweiten Abschnitts mit dem Positionserfassungselement unter einer elastischen Deformation von zumindest einem von zweitem Abschnitt im Positionsgeberelement erfolgt (zum Beispiel im Rahmen einer Verrastung).

Beispielsweise kann das Positionsgeberelement unter einer zumindest lokalen elastischen Deformation des zweiten Abschnitts mit der Kopplungsanordnung gekoppelt oder koppelbar sein. Beispielsweise kann ein freies Ende des Positionsgeberelements eine größere Querschnittsabmessung (zum Beispiel einen größeren Durchmesser) als ein Aufnahmebereich des zweiten Abschnitts aufweisen, sodass Letzterer elastisch deformiert wird. Hierüber können Reibungskräfte erzeugt werden, die insbesondere dauerhaft für eine zuverlässige Kopplung wirken können. Ferner kann in diesem Zusammenhang vorgesehen sein, dass der aufgeweitete Bereich nach einem axialen Einführen des Positionsgeberelements zumindest teilweise zurückfedert und hierüber eine formschlüssige Rastverbindung mit dem freien Ende des Positionsgeberelements bildet.

Der Kraftschluss kann mit Reibungskräften einhergehen, die eine axial spielfreie Kopplung und/oder relative axiale Unbeweglichkeit zwischen dem zweiten Abschnitt und Positionsgeberelement unterstützen. Übergeordnet können ferner sowohl ein etwaiger Formschluss als auch ein etwaiger Kraftschluss derart erfolgen, dass der zweite Abschnitt und das Positionsgeberelement in Rotationsrichtung um die Verlagerungsachse im Wesentlichen spielfrei gekoppelt und/oder relativ zueinander unbeweglich sind.

Schließlich kann die Kopplungsanordnung und insbesondere ein etwaiger zweiter Abschnitt hiervon das Positionsgeberelement gegen das wenigstens eine Element der Kolbenanordnung vorspannen. Dies kann dadurch erfolgen, dass ein Koppeln von Kopplungsanordnung und Positionsgeberelement unter einer elastischen Deformation erfolgt (insbesondere von der Kopplungsanordnung). Das Vorspannen kann insbesondere mittels axial auf das Positionsgeberelement einwirkender Rückstellkräfte erreicht werden, welche zum Beispiel in Folge einer elastischen Deformation der Kopplungsanordnung erzeugt werden. Allgemein kann das Positionsgeberelement gemäß dieser Variante in Anlage mit dem Element der Kolbenanordnung (zum Beispiel einer Mitnehmerscheibe) gedrängt oder gehalten werden. Auch hierdurch kann ein axiales Spiel und/oder eine axiale Relativbewegung zwischen dem Positionsgeberelement und der Kolbenanordnung verhindert werden.

Eine Weiterbildung sieht vor, dass der zweite Abschnitt gegenüber dem ersten Abschnitt axial hervorsteht oder dass der zweite Abschnitt durch einen Ausnehmungsbereich in dem ersten Abschnitt gebildet wird. Beispielsweise kann der erste Abschnitt eine axiale Vertiefung, eine axiale Ausnehmung, eine axiale Sacklochbohrung und/oder einen sich im Wesentlichen axial erstreckenden Verrastungsbereich aufweisen, welche jeweils den zweiten Abschnitt bilden können. Andererseits kann der zweite Abschnitt sich ausgehend von dem ersten Abschnitt insbesondere in Richtung des Positionsgeberelements beziehungsweise der Druckkammer erstrecken.

Übergeordnet kann ferner vorgesehen sein, dass sie Kopplungsanordnung derart ausgebildet ist, dass eine maximale radiale Erstreckung der Kolbenanordnung (zum Beispiel ein größter Durchmesser hiervon) um nicht mehr als ca. 25 %, nicht mehr als ca. 10 % oder nicht mehr als ca. 5 % überschritten wird. Mit anderen Worten kann die Kopplungsanordnung dazu ausgebildet sein, nur geringfügig oder auch gar nicht radial von der Kolbenanordnung hervorzustehen.

Das Positionsgeberelement kann zumindest gemäß einer der folgenden Varianten mit dem zweiten Abschnitt koppelbar sein:
- axiales Hineinbewegen in den zweiten Abschnitt; und
- radiales Hineinbewegen in den zweiten Abschnitt.

Zur Vereinfachung der Montage kann vorgesehen sein, dass lediglich eines von einem axialen und radialen Hineinbewegen erfolgt oder dass lediglich ein einziger aus diesen Bewegungen kombinierter Vorgang des Hineinbewegens erfolgt. Dies kann die Anzahl der erforderlichen Montageschritte begrenzen.

Allgemein kann die Kopplungsanordnung ferner ein Befestigungselement umfassen, insbesondere um das Positionsgeberelement dauerhaft mit der Kopplungsanordnung zu koppeln. Dieses kann separat von dem ersten und zweiten Abschnitt ausgebildet und beispielsweise selektiv mit dem zweiten Abschnitt verbindbar sein. Bei dem Befestigungselement kann es sich um eine Befestigungsklammer, einen Befestigungsstift oder dergleichen handeln. Das Befestigungselement kann eine Befestigungskraft ausüben, beispielsweise um den zweiten Abschnitt und das Positionsgeberelement aneinander zu befestigen oder gegeneinander zu verspannen. Zusätzlich oder alternativ kann unter Einwirken des Befestigungselements ein Formschluss zwischen dem zweiten Abschnitt und dem Positionsgeberelement hergestellt und/oder verstärkt werden. Beispielsweise kann das Befestigungselement dazu eingerichtet sein, eine derartige Befestigungskraft auszuüben, dass der zweite Abschnitt mit dem Positionsgeberelement in Eingriff gelangt und/oder in einem Eingriff mit diesem gehalten wird. Der zweite Abschnitt und/oder das Positionsgeberelement können unter Einwirken des Befestigungselements auch zumindest lokal elastisch deformiert werden.

Das Positionsgeberelement kann ferner einen Endabschnitt umfassen, der dazu ausgebildet ist, mit dem zweiten Abschnitt der Kopplungsanordnung zu wechselwirken. Der Endabschnitt kann ein freies Ende beziehungsweise einen freien Endbereich des Positionsgeberelements umfassen oder durch dieses gebildet werden. Dieser Endbereich kann eine Durchmesserstufe umfassen, um mit dem zweiten Abschnitt gekoppelt zu werden. In dem Fall, dass das Positionsgeberelement stabförmig ausgebildet ist, kann der freie Endabschnitt insbesondere ein von der Erfassungseinheit abgewandtes Ende des Positionsgeberelements umfassen.

Der Endabschnitt kann ferner mit einem vorbestimmten Bereich der Kopplungsanordnung oder des wenigstens einen Elements der Kolbenanordnung in Anlage geraten. Dies kann die axiale Position des Positionsgeberelements zusätzlich sichern. Hierzu kann beispielsweise ein Endstück des Endabschnitts, das auf eine Durchmesserstufe in dem Endabschnitt folgen kann, in eine solche Anlage gebracht werden. Ferner kann diese Anlage durch Ausüben von Kräften auf das Positionsgeberelement und/oder die Kopplungsanordnung oder Kolbenanordnung unterstützt werden. Hierfür kann die Kopplungsanordnung beispielsweise in vorbestimmter Weise elastisch deformiert werden, um Rückstellkräfte zu erzeugen, die das Positionsgeberelement in eine entsprechende Anlage drängen.

Ferner kann vorgesehen sein, dass der zweite Abschnitt den Endabschnitt zumindest teilweise axial überspannt. Mit anderen Worten kann der zweite Abschnitt sich axial entlang des Endabschnitts erstrecken und/oder diesen zumindest teilweise aufnehmen. Beispielsweise kann der zweite Abschnitt zumindest teilweise axial parallel zu dem Endabschnitt verlaufen und/oder auch radial hierzu. Dies kann auch über verschiedene Bereiche beziehungsweise Teilabschnitte des zweiten Abschnittes erfolgen.

Zum Beispiel kann der zweite Abschnitt einen sich im Wesentlichen axial erstreckenden Teilabschnitt wie auch einen sich im Wesentlichen radial erstreckenden Teilabschnitt umfassen. Dabei kann der axiale Teilabschnitt in den zweiten Abschnitt der Kopplungsanordnung übergehen und der radiale Teilabschnitt kann von dem axialen Teilabschnitt abgewinkelt sein, insbesondere in Richtung des Endabschnittes des Positionsgeberelements. In diesem Fall kann der Endabschnitt zumindest durch den axialen Teilabschnitt axial überspannt werden.

### Kurze Beschreibung der Figuren

Weitere Vorteile, Einzelheiten und Merkmale der hier beschriebenen Lösung ergeben sich aus der nachfolgenden Beschreibung von Ausführungsbeispielen sowie aus den Figuren. Es zeigen:
- Fig. 1: eine Schnittansicht durch eine erfindungsgemäße Hauptbremszylinderanordnung;
- Fig. 2A-C: Ansichten zur Erläuterung einer Kopplungsanordnung gemäß eines ersten Ausführungsbeispiels;
- Fig. 3A-D: Ansichten zur Erläuterung einer Kopplungsanordnung gemäß eines zweiten Ausführungsbeispiels;
- Fig. 4A-C: Ansichten zur Erläuterung einer Kopplungsanordnung gemäß eines dritten Ausführungsbeispiels;
- Fig. 5A-C: Ansichten zur Erläuterung einer Kopplungsanordnung gemäß eines vierten Ausführungsbeispiels;
- Fig. 6A-C: Ansichten zur Erläuterung einer Kopplungsanordnung gemäß eines fünften Ausführungsbeispiels;
- Fig. 7A-B: Ansichten zur Erläuterung einer Kopplungsanordnung gemäß eines sechsten Ausführungsbeispiels;
- Fig. 8A-D: Ansichten zur Erläuterung einer Kopplungsanordnung gemäß eines siebten Ausführungsbeispiels;
- Fig. 9A-C: Ansichten zur Erläuterung einer Kopplungsanordnung gemäß eines achten Ausführungsbeispiels; und
- Fig. 10A-C: Ansichten zur Erläuterung einer Kopplungsanordnung gemäß eines neunten Ausführungsbeispiels.

### Detaillierte Beschreibung

Im Folgenden werden verschiedene Ausführungsbeispiele erläutert. Gleichartige oder gleichwirkende Merkmale sind dabei teilweise mit gleichen Bezugszeichen versehen.

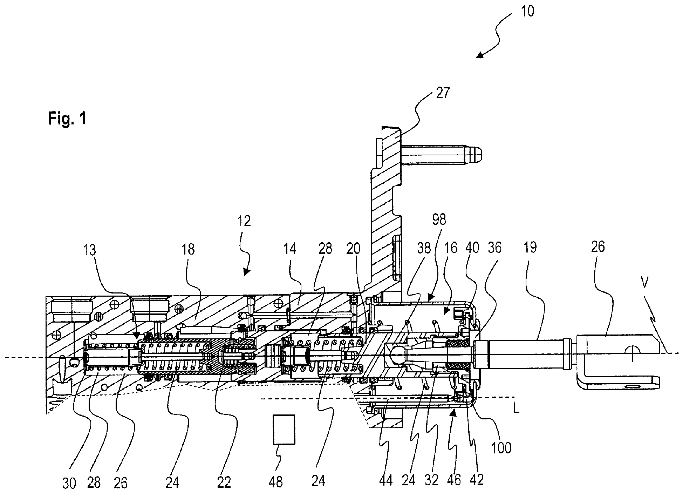

In Figur 1 ist eine erfindungsgemäße Hauptbremszylinderanordnung 10 in einer eine Verlagerungsachse V enthaltenden Schnittansicht gezeigt. Die Hauptbremszylinderanordnung 10 umfasst eine Gehäuseanordnung 12, die eine Kolbenanordnung 13 aufnimmt. In dem gezeigten Ausführungsbeispiel umfasst die Gehäuseanordnung 12 einen ersten Gehäuseteil 14, der abschnittsweise zylindrisch ausgebildet ist und der eine Eingangskammer 16 für ein Krafteingangsglied 19 bereitstellt. Der erste Gehäuseteil 14 ist als separat handhabbares Element von einem zweiten Gehäuseteil 18 ausgebildet, jedoch fest mit diesem verschraubt. Schließlich ist an dem ersten Gehäuseteil 14 ein Befestigungsbereich 27 zur Befestigung der Hauptbremszylinderanordnung 10 in dem Motorraum eines Fahrzeugs ausgebildet.

Die Kolbenanordnung 13 umfasst einen ersten Kolben 20, der mit dem Krafteingangsglied 19 gekoppelt ist. Ferner umfasst die Kolbenanordnung 13 einen zweiten Kolben 22, der unter anderen über eine Rückstellfeder 24 mit dem ersten Kolben 20 gekoppelt ist. Die Kolben 20,24 begrenzen mit einer sich axial entlang der Verlagerungsachse V erstreckenden Zylinderbohrung 26 jeweils eine Druckkammer 28. Die Druckkammern 28 sind jeweils in bekannter Weise mit einem Pedalgegenkraftsimulator, einem Bremsflüssigkeitsreservoir oder bei einem Systemversagen direkt mit einem Bremskreislauf eines Kraftfahrzeugs koppelbar (nicht gezeigt).

In Figur 1 erkennt man ferner, dass das Krafteingangsglied 19 als mehrteiliges kolbenförmiges Element ausgebildet ist. Das Krafteingangsglied 19 umfasst an seinem von dem ersten Gehäuseteil 14 abgewandten Ende einen Kopplungsabschnitt 26 zur Kopplung mit einem nicht dargestellten Bremspedal. Wie nachfolgend noch ausführlich erläutert, ist das Krafteingangsglied 19 ferner entlang einer Verlagerungsachse V relativ zu der Gehäuseanordnung 12 verlagerbar und insbesondere in den ersten Gehäuseteil 14 einschiebbar und aus diesem herausziehbar.

Das Krafteingangsglied 19 erstreckt sich durch eine Eingangsöffnung 36 des ersten Gehäuseteils 14 in eine axiale Sacklochbohrung 32 in dem ersten Kolben 20 hinein, wobei die Sacklochbohrung 32 der Eingangsöffnung 36 zugewandt ist. In der Sacklochbohrung 32 ist ein dem ersten Kolben 20 zugewandtes Ende des Krafteingangsgliedes 19 mit einer Aufnahmehülse 38 des ersten Kolbens 20 verstemmt. Folglich ist eine Verlagerungsbewegung des Krafteingangsgliedes 19 auf den ersten und über die Rückstellfeder 24 auch auf den zweiten Kolben 20,22 übertragbar.

In die Sacklochbohrung 32 ist ferner ein Mitnehmerelement in Form einer Mitnehmerscheibe 40 eingeschraubt. Diese weist einen größeren Außendurchmesser auf als der erste Kolben 20, aber auch als der zweite Kolben 22 oder die Zylinderbohrung 26. Zwischen der Mitnehmerscheibe 40 und einem gegenüberliegenden Stirnflächenbereich des ersten Gehäuseteils 14 ist eine weitere Rückstellfeder 24 angeordnet. Diese nimmt den ersten Kolben 20 im Wesentlichen koaxial auf und erstreckt sich entlang der Verlagerungsachse V.

Figur 1 zeigt die Hauptbremszylinderanordnung 10 in einer Ausgangsstellung oder, anders ausgedrückt, in einer bremsinaktiven Ruheposition. Zum Erzeugen von Bremsdrücken wird das Krafteingangsglied 19 nach Maßgabe einer Bremspedalbetätigung in Figur 1 nach links entlang der Verlagerungsachse V bewegt. Dabei verschieben sich die Kolben 20,22 innerhalb der Zylinderbohrung 26 und verringern das Volumen der jeweils zugeordneten Druckkammern 28. Ferner werden dabei die Rückstellfedern 24 komprimiert. Übt der Fahrer keine Betätigungskraft mehr auf das Bremspedal beziehungsweise das Krafteingangsglied 19 aus, drängen die Rückstellfedern 26 die Kolben 20,22 wieder in ihre Ausgangsstellung zurück.

Die Kolbenanordnung 13 umfasst in dem gezeigten Ausführungsbeispiel die beiden Kolben 20,22 sowie das Krafteingangsglied 19 und die dazwischen positionierten Rückstellfedern 24. Insgesamt ist die Kolbenanordnung 13 ferner in bekannter Weise nach Tandem-Zylinder-Bauart ausgebildet. Die eigentliche Druckkolbeneinheit der Kolbenanordnung 13 umfasst hingegen lediglich die Kolben 20,22, wobei der erste Kolben 20 mehrteilig ausgebildet ist und ferner die vorstehend geschilderte Mitnehmerscheibe 40 umfasst.

Wie nachstehend noch näher erläutert, ist an der Mitnehmerscheibe 40 ferner eine Kopplungsanordnung 42 angeordnet, über die sie mit einem stabförmigen Positionsgeberelement 44 gekoppelt ist. Das Positionsgeberelement 44 weist eine Längsachse L auf, die sich parallel zu der Verlagerungsachse V erstreckt. Ferner weist das Positionsgeberelement 44 einen im Wesentlichen kreisrunden Querschnitt mit einem in den Endbereichen variierendem Durchmesser auf.

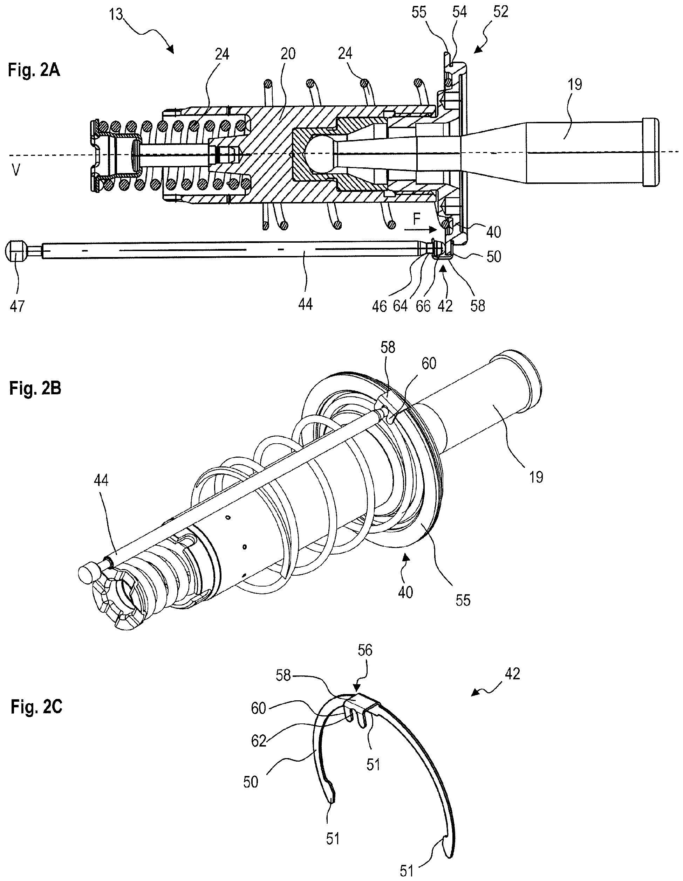

In Figur 1 ist die Hauptbremszylinderanordnung 10 und insbesondere das Positionsgeberelement 44 nicht vollständig abgebildet. Man erkennt jedoch einen ersten freien Endabschnitt 46 des Positionsgeberelements 44, der mit der Kopplungsanordnung 42 wechselwirkt. Hiervon ausgehend erstreckt sich das Positionsgeberelement 44 gradlinige entlang der Längsachse L. Ein dem ersten Endabschnitt 46 gegenüberliegenden zweiten Endabschnitt 47 (siehe Figur 2A) des Positionsgeberelements 44 ist dazu ausgelegt mit einer nachgeschalteten Erfassungseinheit mechanisch spielfrei gekoppelt zu werden. Bewegungen des zweiten Endabschnitts können daher in bekannter Weise von einer schematisch angedeuteten Erfassungseinheit 48 erfasst werden, welche einen Magnetfeldsensor umfasst (zum Beispiel einen Hall-Sensor).

Zusammengefasst ist es somit möglich, Bewegungen des Positionsgeberelements 44 mittels der Erfassungseinheit 48 zu detektieren. Diese Bewegungen des Positionsgeberelements 44 deuten aufgrund der Kopplung mit der Kolbenanordnung 13 oder dem Krafteingangsglied 19 über beispielsweise die Mitnehmerscheibe 40 auf eine Bremspedalbetätigung durch den Fahrer hin. Anders ausgedrückt geht eine Bremspedalbetätigung mit einer Verlagerung des Krafteingangsgliedes 19 und der damit gekoppelten Kolbenanordnung 13 in Figur 1 nach links entlang der Verlagerungsachse V einher. Gleichzeitig wird auch das Positionsgeberelement 44 über die Mitnehmerscheibe 40 nach Maßgabe dieser Verlagerung nach links bewegt, wobei die Verschiebung des zweiten Endabschnitts 47 (siehe Figur 2A) entlang der Verlagerungsachse V von der Erfassungseinheit 48 erfasst wird. Diese Information kann in bekannter Weise von nicht dargestellten Steuereinheiten ausgewertet werden, um auf das Vorliegen sowie das Ausmaß eines Bremswunsches des Fahrers zu schließen.

Um die Genauigkeit der Positions- beziehungsweise Pedalbetätigungserfassung zu erhöhen, sind gemäß dem gezeigten Beispiel das Positionsgeberelement 44 und die Mitnehmerscheibe 40 im Wesentlichen axial starr oder, anders ausgedrückt, axial spielfrei miteinander gekoppelt. Dies erfolgt über die nachfolgend erläuterte Kopplungsanordnung 42. Diese ist dazu ausgebildet, eine axiale Relativbewegung zwischen dem Positionsgeberelement 44 und der Mitnehmerscheibe 40 im Wesentlichen vollständig zu unterdrücken.

Beim Betrieb der Hauptbremszylinderanordnung 10 kann es allerdings vorkommen, dass Bestandteile der Kolbenanordnung 13 um die Verlagerungsachse V rotieren. Dies betrifft insbesondere die Kolben 20,22, wobei diese Rotation auch auf die Mitnehmerscheibe 40 übertragen wird. Es wurde erkannt, dass infolge dieser Rotationen eine mechanische Verbindung zwischen dem Positionsgeberelement 44 und der Mitnehmerscheibe 40 bisher oft übermäßig stark belastet wurde. Dies minderte die Zuverlässigkeit, da es beispielsweise einer querkraftbedingten Schädigung der Führung des Positionsgeberelements 44 oder anderweitigen Fehlfunktionen kommen konnte (zum Beispiel zu einem Verbiegen des Positionsgeberelements 44). Die Wahrscheinlichkeit derartiger Fehlfunktionen kann durch die Kopplungsanordnungen 42 der nachfolgend erläuterten Ausführungsbeispiele verringert werden. Diese Ausführungsbeispiele beruhen jeweils auf dem Grundaufbau gemäß Figur 1 und betreffen jeweils besondere Ausgestaltungen von zum Beispiel der Kopplungsanordnung 42.

Ein erstes Ausführungsbeispiel ist in den Figuren 2A-C gezeigt. Die Figur 2A zeigt lediglich einen Ausschnitt einer Hauptbremszylinderanordnung 10, die analog zu dem Beispiel aus Figur 1 ausgebildet ist. Dabei zeigt Figur 2A eine Teilschnittansicht dieses Ausschnitts, wohingegen Figur 2B eine perspektivische Darstellung hiervon enthält. Man erkennt beispielsweise den ersten Kolben 20 sowie die dazugehörigen Rückstellfedern 24. Ferner sind erneut das Krafteingangsglied 19 sowie die mit dem Kolben 20 gekoppelte Mitnehmerscheibe 40 gezeigt. Auch das Positionsgeberelement 44 sowie die Kopplungsanordnung 42 zwischen der Mitnehmerscheibe 40 und dem Positionsgeberelement 44 sind gezeigt.

Man erkennt, dass die Mitnehmerscheibe 40 einen radial hervorstehenden Bereich der Kolbenanordnung 13 bildet und einen größeren Durchmesser aufweist als der erste Kolben 20, welcher die Druckkammer 28 begrenzt. Der Durchmesser der Mitnehmerscheibe 40 ist derart gewählt, dass diese dem ersten Endabschnitt 46 des Positionsgeberelements 44 axial gegenüberliegt. Ausgehend von der in Figur 2A nicht gezeigten Eingangsöffnung 36 (siehe Figur 1) und in eine bremsaktive Verlagerungsrichtung betrachtet, ist die Mitnehmerscheibe 40 dabei dem Positionsgeberelement 44 vorgeschaltet, sodass es dieses in der vorstehend beschriebenen Weise durch Übertragen von Druckkräften verschieben kann. Bei einer Verlagerung in eine bremsinaktive Stellung (also in Figur 1 nach rechts) werden mittels der Mitnehmerscheibe 40 hingegen Zugkräfte auf das Positionsgeberelement 44 übertragen, um dieses wieder in die in Figur 1 gezeigte Ausgangsstellung zurück zu bewegen. Das Übertragen dieser Kräfte erfolgt dabei mittels der Kopplungsanordnung 42. Diese ist als ein einstückiges Blechbiegeteil ausgebildet.

Figur 2C zeigt die Kopplungsanordnung 42 in perspektivische Einzeldarstellung. Man erkennt einen ersten Abschnitt 50, der einen geöffneten ringförmigen Bereich bildet. Der ringförmige Bereich überspannt einen Winkelbereich von ca. 270° oder, mit anderen Worten, ist in Umfangsrichtung über einen Winkelbereich von ca. 90° geöffnet. Mittels dieses ersten Abschnitts 50 ist die Kopplungsanordnung 42 mit der Mitnehmerscheibe 40 koppelbar. Hierzu umfasst der erste Abschnitt 50 an dessen jeweiligen freien Enden zwei einander zugewandte und radial einwärts hervorstehende Abschnitte 51. Diese sind in einer nachfolgend erläuterten Ausnehmung 54 der Mitnehmerscheibe 40 aufgenommen.

Genauer gesagt umfasst die Mitnehmerscheibe 40 eine die Verlagerungsachse V umlaufende aber von dieser abgewandte Kopplungsfläche 52 (siehe Figur 2A). Die Kopplungsfläche 52 umfasst wiederum eine Ausnehmung 54, die als eine die Verlagerungsachse V umlaufende Nut ausgebildet ist. Mit anderen Worten stellt die Ausnehmung 54 einen ringförmig in Umfangsrichtung umlaufenden radialen Vertiefungsbereich innerhalb der Kopplungsfläche 52 bereit. In dieser Ausnehmung 54 ist der erste Abschnitt 50 der Kopplungsanordnung 42 zumindest teilweise aufnehmbar. Im montierten Zustand gemäß Figur 2A erstreckt sich der erste Abschnitt 50 der Kopplungsanordnung 42 demnach ebenfalls um die Verlagerungsachse V entlang der Ausnehmung 54.

Eine axiale Erstreckung der Ausnehmung 54 ist ferner derart bemessen, dass der erste Abschnitt 50 axial spielfrei darin angeordnet ist. Dies verhindert axiale Relativbewegungen zwischen der Mitnehmerscheibe 40 und der Kopplungsanordnung 42. Zusätzlich ist eine zwischen der Ausnehmung 54 und dem Positionsgeberelement 44 positionierte Durchmesserstufe 55 der Mitnehmerscheibe 40 bereitgestellt, welche sich ausgehend von der Ausnehmung 54 erstreckt. Diese stellt einen axialen Anschlagbereich für den zweiten Abschnitt 50 der Kopplungsanordnung 42 bereit. Hierdurch wird das Verhindern einer axialen Relativbewegung zwischen der Kopplungsanordnung 42 und der Mitnehmerscheibe 40 zumindest bei einer bremsaktiven Verlagerung in Figur 2A nach links zusätzlich unterstützt.

Bei einem Anordnen der Kopplungsanordnung 42 an der Mitnehmerscheibe 40 wird der erste Abschnitt 50 radial einwärts auf die Mitnehmerscheibe 40 aufgeschoben. Hierbei wird der erste Abschnitt 50 elastisch aufgeweitet und liegt insbesondere über die radial einwärts hervorstehenden Abschnitte 51 am Grund der Ausnehmung 54 an. Auch im Bereich eines nachfolgend erläuterten zweiten Abschnitts 56 findet sich ein entsprechender radial einwärts hervorstehender Abschnitt 51. Aufgrund der elastischen Deformation des ersten Abschnitts 50 werden dabei definierte Reibungskräfte zwischen den jeweiligen radial einwärts hervorstehenden Abschnitten 51 und der Mitnehmerscheibe 40 erzeugt. Hierüber kann die nachfolgend erläuterte Rotierbarkeit der Kopplungsanordnung 42 um die Verlagerungsachse V definiert eingestellt werden.

Zurückkommend auf Figur 2C erkennt man ferner einen zweiten Abschnitt 56 der Kopplungsanordnung 42. Der zweite Abschnitt 56 umfasst einen ersten axialen Teilabschnitt 58, der sich ausgehend von dem ersten Abschnitt 50 parallel zu der Verlagerungsachse V in Richtung des Positionsgeberelements 44 erstreckt (siehe Figur 2A). Dabei überspannt der axiale Teilabschnitt 58 zumindest teilweise den ersten Endabschnitt 46 des Positionsgeberelements 44. Der axiale Teilabschnitt 58 geht in einen radialen Teilabschnitt 60 über. Dieser erstreckt sich ausgehend von dem axialen Teilabschnitt 58 radial einwärts beziehungsweise radial nach innen (also in Richtung der Verlagerungsachse V). Der radiale Teilabschnitt 60 umfasst eine radial nach innen geöffnete Ausnehmung 62.

Wie in den Figuren 2A-C in Zusammenschau erkennbar, umfasst der erste Endabschnitt 46 ferner einen durchmesserreduzierten Bereich 64, der in ein durchmesservergrößertes Endstück 66 übergeht. Somit wird eine Durchmesserstufe innerhalb des ersten Endabschnitts bereitgestellt. Diese kann radial in die Ausnehmung 62 des zweiten Abschnitt 56 der Kopplungsanordnung 42 eingeführt werden. Dabei gerät der Endabschnitt 66 in Anlage mit einer der Mitnehmerscheibe 40 zugewandten Seite des radialen Teilabschnitts 60. Hierüber wird ein Formschluss gebildet, der ein axiales Relatiwerschieben zwischen der Kopplungsanordnung 42 und dem Positionsgeberelement 44 unterdrückt.

Ferner erkennt man in Figur 2A, dass das Endstück 66 des Endabschnitts 46 des Positionsgeberelements 44 an einer dem Positionsgeberelement 44 zugewandten Seite der Mitnehmerscheibe 40 anliegt. Der zweite Abschnitt 56 der Kopplungsanordnung 42 und insbesondere dessen axialer Teilabschnitt 58 ist dabei derart bemessen, dass dieser in Folge eines Koppelns mit dem Endabschnitt 46 geringfügig elastisch deformiert wird. Konkret wird der axiale Teilabschnitt geringfügig durchgebogen, damit die Ausnehmung 62 des radialen Teilabschnitts 60 über das Endstück 66 des Positionsgeberelements 44 geführt werden kann. Folglich entsteht eine Rückstellkraft F, die das Positionsgeberelement 44 an die Mitnehmerscheibe 40 zieht beziehungsweise gegen diese verspannt. Dies trägt zu einer axial spielfreien wie auch axial starren Kopplung von Mitnehmerscheibe 40 und Positionsgeberelement 44 bei. Die Anlage des Endstücks 66 an der Mitnehmerscheibe 40 steht einer nachstehend erläuterten Rotation relativ zu der Mitnehmerscheibe 40 um die Verlagerungsachse V jedoch nicht entgegen. Stattdessen kann hierüber gezielt eingestellt werden, ab welchen Kräften eine derartige Relativrotation (bzw. ein relatives Verrutschen) ermöglicht wird. Ferner ist darauf hinzuweisen, dass das vorliegende Ausführungsbeispiel auch ohne eine derartige Anlage des Endstücks 66 an der Mitnehmerscheibe 40 und/oder das damit einhergehende Vorspannen umgesetzt werden kann. Hierzu müssen lediglich die Abmessungen des axialen Teilabschnittes 58 und/oder des Endstücks 66 entsprechend angepasst werden.

Für die Verbesserung der Zuverlässigkeit ist bei dem vorliegenden Ausführungsbeispiel ferner vorgesehen, dass der zweite Abschnitt 50 entlang der Ausnehmung 54 bewegbar ist und somit in Umfangsrichtung an der Kopplungsfläche 52 abgleiten kann. Dies geht mit einer Relativrotation zwischen dem Kopplungsabschnitt 42 und der Kolbenanordnung 13 (beziehungsweise der Mitnehmerscheibe 40) um die Verlagerungsachse V einher. Kommt es im Betrieb demnach zu einer Rotation der Mitnehmerscheibe 40 um die Verlagerungsachse V, kann der Kopplungsabschnitt 22 und somit auch das Positionsgeberelement 44 in einer im Wesentlichen konstanten Winkelposition um die Verlagerungsachse V verbleiben, da die Mitnehmerscheibe 40 rotatorisch von dem Kopplungsabschnitt 42 weitestgehend entkoppelt ist.

Dies kann ferner dadurch unterstützt werden, dass das Positionsgeberelement 44 in einer nicht dargestellten axialen Führungshülse oder -buchse gehalten wird. Kommt es zu einer Rotation der Mitnehmerscheibe 40 kann diese zu dem im Wesentlichen feststehenden Kopplungsabschnitt 42 um die Verlagerungsachse V verrutschen, ohne dass die dabei wirkenden Rotationskräfte verlagerungswirksam auf das Positionsgeberelement 44 oder den Kopplungsabschnitt 42 einwirken können.

Zusammengefasst weist die Kopplungsanordnung 42 somit zwei definierte Abschnitte 50,56 auf, die eine Funktionstrennung ermöglichen. Genauer gesagt ist der zweite Abschnitt 56 insbesondere für das Koppeln mit dem Positionsgeberelement 44 ausgelegt, wohingegen der erste Abschnitt 50 primär für das Koppeln mit der Mitnehmerscheibe 40 vorgesehen ist. Ferner stellt der erste Abschnitt 50 den rotatorischen Freiheitsgrad der Kopplungsanordnung 42 relativ zu der Mitnehmerscheibe 40 bereit, wohingegen der zweite Abschnitt 56 primär der festen und insbesondere axial spielfreien Verbindung zu dem Positionsgeberelement 44 dient. Wie erläutert, ist aber auch der erste Abschnitt 50 axial spielfrei an der Mitnehmerscheibe 40 angeordnet und unterstützt daher die axial spielfreie Kopplung.

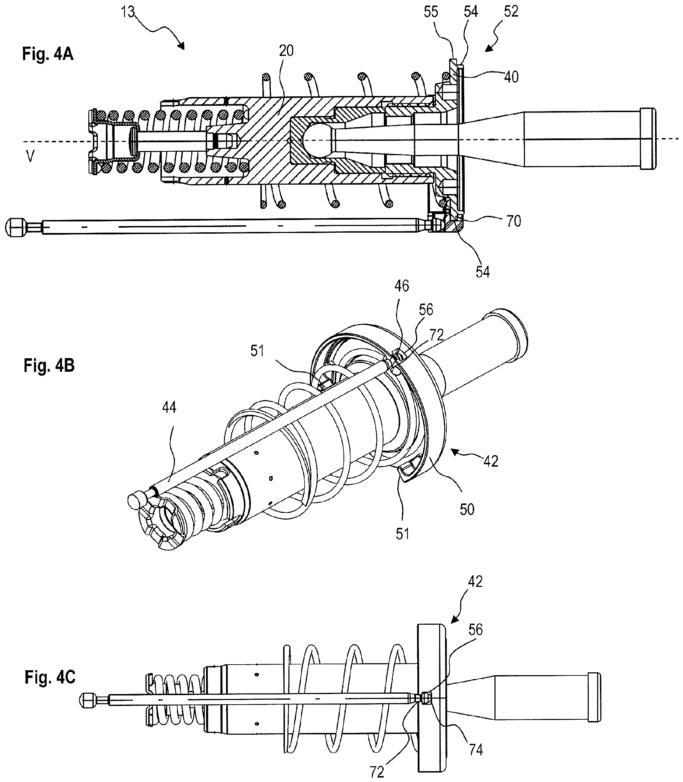

Die nachfolgenden Figurengruppen A-C enthalten jeweils gleichartige Darstellungen zu der Figurengruppe 2A-C. Mit anderen Worten ist in den mit A bezeichneten Figuren jeweils eine Schnittansicht eines Ausschnitts analog zu Figur 2A gezeigt. In den mit B bezeichneten Figuren ist hingegen eine perspektivische Darstellung dieses Ausschnitts gezeigt. Die mit C und teilweise zusätzlich auch mit D bezeichneten Figuren zeigen in der Regel die jeweiligen Kopplungsanordnungen 42 in Einzelteildarstellungen (mit Ausnahme von zum Beispiel Figur 4C).

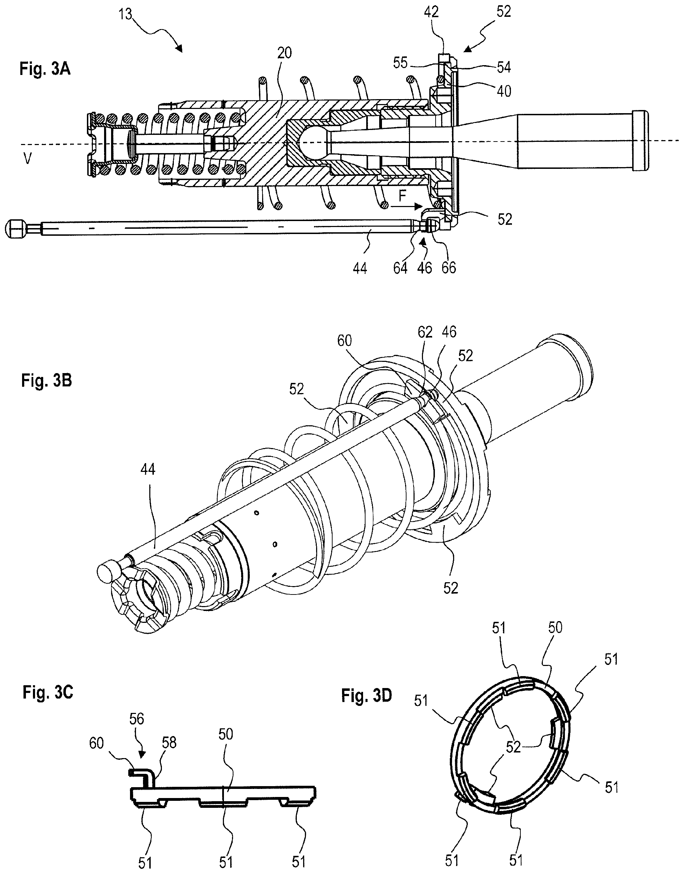

Die Figuren 3A-C zeigen ein zweites Ausführungsbeispiel. Man erkennt erneut die Kolbenanordnung 13 umfassend eine Mitnehmerscheibe 40. An deren Außenumfangsfläche ist wiederum eine Kopplungsanordnung 42 angeordnet, die eine Verbindung zu dem Positionsgeberelement 44 ermöglicht. Im Detail umfasst die Kopplungsanordnung 42 einen ersten Abschnitt 50 zur Kopplung an der Kolbenanordnung 13 beziehungsweise der Mitnehmerscheibe 40, wobei dieser erste Abschnitt 50 als ein geschlossener Ring ausgebildet ist. Wie man in Figur 3D erkennt, sind an einer von dem Positionsgeberelement 44 abgewandten Seite des ersten Abschnitts 50 mehrere radial einwärts hervorstehende erste Bereiche 51 ausgebildet. Gleiches gilt für eine dem Positionsgeberelement 44 zugewandten Seite, an der ebenfalls mehrere radial einwärts hervorstehende zweite Bereiche 52 ausgebildet sind.

Die Kopplungsanordnung 42 ist aus einem elastisch deformierbaren Kunststoffmaterial hergestellt. Wie aus den Figuren 3A-B ersichtlich, kann sie demnach unter einer elastischen Deformation axial über die Mitnehmerscheibe geschoben beziehungsweise gestülpt werden, um damit axial spielfrei gekoppelt zu werden. Hierfür umfasst die Mitnehmerscheibe 40 eine durchmessergrößte Außenumfangsfläche, welche eine Kopplungsfläche 52 zur Befestigung des ersten Abschnitts 50 bildet. In dieser Kopplungsfläche 52 ist eine in Umfangsrichtung umlaufende Ausnehmung 54 bereitgestellt, die stufenförmig ausgebildet ist. Analog zu dem vorigen Ausführungsbeispiel ist somit eine dem Positionsgeberelement 44 zugewandte Durchmesserstufe 55 bereitgestellt, welche sich ausgehend von der Ausnehmung 54 erstreckt.

Die durch die Ausnehmung 54 und Durchmesserstufe 55 gebildete stufenförmigen Struktur kann von den radial einwärts hervorstehenden Bereichen 51,52 des ersten Abschnitts 50 umgriffen werden, sodass sie Kopplungsanordnung 42 und die Mitnehmerscheibe 40 axial spielfrei gekoppelt sind. Dies kann optional auch unter einem gezielten Einstellen von Reibungskräften erfolgen, beispielsweise durch Festlegen des elastischen Deformationsgrades beim Anordnen des ersten Abschnitts 50 an der Mitnehmerscheibe 40. Hierüber kann eine ausreichend zuverlässige Befestigung erzielt werden, ohne jedoch eine relative Rotierbarkeit dieser Elemente um die Verlagerungsachse V zu unterdrücken.

In Figur 3C erkennt man wiederum den zweiten Abschnitt 56 der Kopplungsanordnung 42. Dieser umfasst erneut einen axialen Teilabschnitt 58 wie auch einen radialen Teilabschnitt 60. In diesem Fall erstreckt sich der radiale Teilabschnitt 60 jedoch ausgehend von dem axialen Teilabschnitt 58 radial nach außen. Ferner umfasst der radiale Teilabschnitt 60 eine radial nach außen geöffnete Ausnehmung 62. Ein Endabschnitt 46 des Positionsgeberelements 44 kann demnach durch eine radial nach innen gerichtete Bewegung mit dem zweiten Abschnitt 56 gekoppelt werden. Hierbei wird wiederum ein Formschluss zwischen der Ausnehmung 62 und dem Endabschnitt 46 hergestellt, der analog zum vorigen Beispiel eine Durchmesserstufe aufgrund eines durchmesserreduzierten Bereich 64 umfasst, welcher in ein durchmesservergrößertes Endstück 66 übergeht. In der Darstellung von Figur 3A liegt das Endstück 66 wiederum an der Mitnehmerscheibe 40 an. Wie im vorigen Fall, kann dies durch eine elastische Deformation des zweiten Abschnitts 56 unterstützt werden, wobei auch entsprechende Rückstellkräfte F wirken können. Es ist jedoch ebenso denkbar, das gezeigte Beispiel ohne eine solche Deformation und/oder Anlage auszubilden.

Im Ergebnis wird über die Kopplungsanordnung 42 erneut eine axial spielfreie und vor allem axial starre Kopplung von Positionsgeberelement 44 und der Kolbenanordnung 13 ermöglicht, wobei jedoch eine relative Rotation um die Verlagerungsachse V des in der Regel feststehenden Positionsgeberelements 44 zu der Kolbenanordnung 13 ermöglicht wird. Dies wird mittels eines Abgleitens des ersten Abschnittes 50 der Kopplungsanordnung 42 in Umfangsrichtung entlang der Kopplungsfläche 52 ermöglicht.

Die Figuren 4A-C zeigen ein drittes Ausführungsbeispiel. Die Kolbenanordnung 13 ist dabei identisch zu der Kolbenanordnung aus Figur 3A ausgebildet. Folglich umfasst die Mitnehmerscheibe 40 wiederum eine durchmessergrößte Außenumfangsfläche, die als Kopplungsfläche 52 dient sowie eine umlaufende Ausnehmung 54 und eine Durchmesserstufe 55 umfasst. Die Kopplungsanordnung 42 ist hingegen wiederum als geöffneter Ring ausgebildet, analog zu dem ersten Ausführungsbeispiel gemäß den Figuren 2A-C. Insbesondere in Figur 4C erkennt man jedoch, dass die Kopplungsanordnung 42 mit einer gegenüber dem ersten Ausführungsbeispiel deutlich größeren axialen Erstreckung ausgebildet ist.

Konkret umfasst die Kopplungsanordnung 42 wiederum einen ersten Abschnitt 50, welcher als entsprechend geöffneter ringförmiger Bereich ausgebildet ist. In Figur 4B erkennt man ferner, dass hierbei erneut radial einwärts hervorstehende Bereiche 51 an den freien Enden des ringförmigen ersten Abschnitts 50 vorgesehen sind. Diese liegen an einer dem Positionsgeberelement 44 zugewandten Seite der Mitnehmerscheibe 40 an. An einer der Mitnehmerscheibe zugewandten Innenumfangsfläche 70 umfasste der erste Abschnitt 50 ferner eine in Umfangsrichtung umlaufende Ausnehmung 54. Diese nimmt bei einem radialen Aufschieben der Kopplungsanordnung 42 auf die Mitnehmerscheibe 40 die Durchmesserstufe 55 axial spielfrei auf. Über die verschiedenen Bereiche 51 und die Ausnehmung 54 wird die Kopplungsanordnung 42 somit axial spielfrei an der Mitnehmerscheibe 40 positioniert. Dies erfolgt zusätzlich und einem definierten Einstellen von Reibungskräften, da der erste Abschnitt 50 beim Anordnen an den Mitnehmerscheibe 40 elastisch aufgeweitet wird. Diese Reibungskräfte stehen einer Relativrotation von Kopplungsanordnung 42 und Kolbenanordnung 13 um die Verlagerungsachse V jedoch nicht vollständig entgegen.

Das Verbinden von Kopplungsanordnung 42 und Positionsgeberelement 54 erfolgt wiederum über einen zweiten Abschnitt 56. Dieser ist im gezeigten Fall als eine Ausnehmung in dem ersten Abschnitt 50 ausgebildet. Diese Ausnehmung erstreckt sich insbesondere in axialer Richtung und stellt somit einen Freiraum bereit, in dem der Endabschnitt 46 des Positionsgeberelements 54 aufnehmbar ist. Der zweite Abschnitt 56 umfasst ferner einen axialen Eingangsbereich 72, der mit einem reduzierten Querschnitt ausgebildet ist und somit eine Hinterschneidung bereitstellt. Diese kann mit einer Durchmesserstufe des analog zu den vorigen Beispielen ausgebildeten Endabschnitts 46 des Positionsgeberelements 44 wechselwirken, um einen axialen Formschluss und somit eine axial starre Kopplung zwischen dem Positionsgeberelement 44 und der Kopplungsanordnung 42 bereitzustellen.

In Figur 4C erkennt man, dass dies erneut mit einem optionalen Anliegen des Endabschnitts 46 an einer Stirnfläche 74 von in diesem Fall der Kopplungsanordnung 42 einhergeht. Dies kann auch durch etwaige axial wirkende Rückstellkräfte aufgrund einer Deformation des zweiten Abschnitts 56 unterstützt werden.

Insgesamt ermöglicht die Kopplungsanordnung 42 somit erneut eine axial starre Kopplung von Positionsgeberelement 44 und Kolbenanordnung 13, stellt jedoch ebenso eine rotatorische Entkopplung dieser Elemente um die Verlagerungsachse V bereit.

Im Folgenden werden weitere Ausführungsbeispiele diskutiert. Diesen ist jeweils gemein, dass auch hierbei die Kopplungsanordnung 42 das bereits vorstehend erläuterte axial starre Koppeln von Positionsgeberelement 44 und Kolbenanordnung 13 bei einer gleichzeitigen rotatorischen Entkopplung um die Verlagerungsachse V ermöglicht. Ebenso können hierbei, sofern nicht anders angegeben, optional jeweils Anlagen des Endabschnitts 46 des Positionsgeberelements 44 an der Mitnehmerscheibe 40, der Kopplungsanordnung 42 oder weiteren Elementen vorgesehen sein, was wiederum durch etwaige Rückstellkräfte aufgrund einer elastischen Deformation der Kopplungsanordnung 42 unterstützt werden kann.

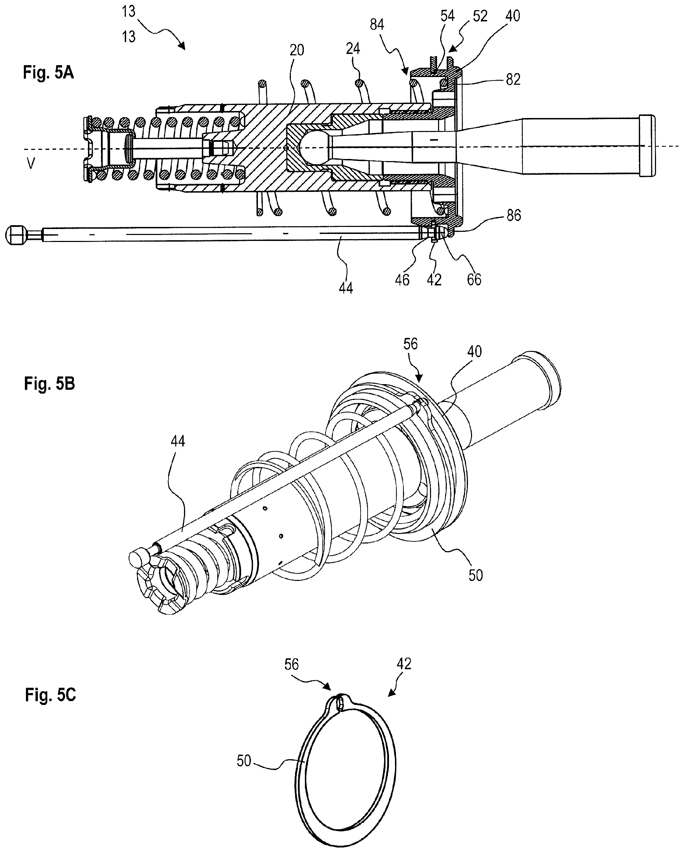

Die Figuren 5A-C zeigen ein viertes Ausführungsbeispiel. Mit Ausnahme der Mitnehmerscheibe 40 ist die Kolbenanordnung 13 aber analog zu dem vorigen Beispiel ausgebildet. Man erkennt, dass in diesem Fall die Mitnehmerscheibe 40 eine gegenüber den vorigen Beispielen vergrößerte axiale Erstreckung in ihrem durchmessergrößten Bereich aufweist. Konkret umfasst die Mitnehmerscheibe 40 einen radial äußeren und in Umfangsrichtung umlaufenden Ringabschnitt 80.

Ausgehend von einem orthogonal zu der Verlagerungsachse V verlaufenden scheibenförmigen Grundabschnitt 82 erstreckt sich der Ringabschnitt 80 axial entlang der Verlagerungsachse V sowie in Richtung der in Figur 5A nicht dargestellten Druckkammer 28. Demnach bildet er einen hohlzylindrischen Aufnahmeabschnitt 84 der Mitnehmerscheibe 40, in der die nahe Eingangsöffnung 36 positionierte Rückstellfeder 24 (sh. Figur 1) abschnittsweise aufnehmbar ist. Genauer gesagt stützt sich ein der Eingangsöffnung 36 zugewandtes Ende der Rückstellfeder 24 an dem Grundabschnitt 82 ab und wird abschnittsweise von dem Ringabschnitt 80 axial überspannt.

An dem Ringabschnitt 80 ist eine Außenumfangsfläche bereitgestellt, die als Kopplungsfläche 52 zum Wechselwirken mit der Kopplungsanordnung 42 dient. Analog zu dem ersten Ausgangsbeispiel gemäß den Figuren 2A-C ist in der Kopplungsfläche 52 eine in Umfangsrichtung umlaufende Ausnehmung 54 in Form einer Nut vorgesehen. Hierin ist ein erster Abschnitt 50 der Kopplungsanordnung 42 axial spielfrei aufgenommen. Die Kopplungsanordnung 42 umfasst hierfür einen ersten Abschnitt 50, der als ein geöffneter Ring ausgebildet ist. Die Öffnung in diesem Ring überspannt einen Winkelbereich von weniger als 10° und definiert den zweiten Abschnitt 56 zur Kopplung mit dem Positionsgeberelement 44.

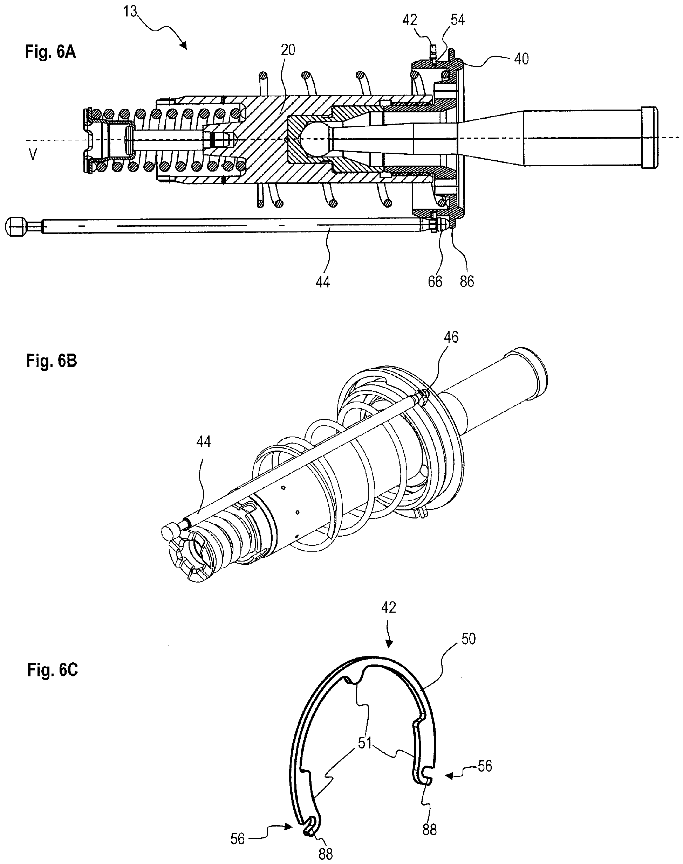

Die Kopplungsanordnung 42 ist unter Aufweitung des ersten Abschnitts 50 in der Ausnehmung 54 der Mitnehmerscheibe 40 anordenbar, wobei auch definierte Reibungskräfte eingestellt werden können (siehe analoge Diskussion zu vorigen Beispielen). Hierzu kann die Kopplungsanordnung 42 radial auf die Mitnehmerscheibe 40 aufgeschoben werden. Anschließend kann der Endabschnitt 46 des Positionsgeberelements 44 axial durch die den zweiten Abschnitt 56 bildende Öffnung im ersten Abschnitt 50 geschoben werden. Auch hierzu wird der erste Abschnitt 50 geringfügig aufgeweitet. Aufgrund der Durchmesserstufe in dem Endabschnitt 46, die analog zu den vorigen Beispielen ausgebildet ist, verengt sich der erste Abschnitt 50 jedoch, sobald das Endstück 66 des Positionsgeberelements 44 durch die Öffnung hindurchgeschoben wurde. Mit anderen Worten schnappt der erste Abschnitt 50 wieder hinter dem Endstück 66 zusammen, sodass ein axialer Formschluss gebildet wird. Zusätzlich gerät das Endstück 66 (optional) in Anlage mit einer Durchmesserstufe 86 der Mitnehmerscheibe 40, um die axiale Position des Positionsgeberelements 44 zu sichern (sh. Fig. 5A). Die rotatorische Entkopplung erfolgt hingegen wiederum über ein relatives Verrutschen des ersten Abschnitts 50 der Kopplungsanordnung 42 entlang der Ausnehmung 54 der Mitnehmerscheibe 40. Die Figuren 6A-C zeigen ein fünftes Ausführungsbeispiel. Dieses umfasst eine analog zu dem vierten Ausführungsbeispiel ausgebildete Mitnehmerscheibe 40. Die Kopplungsanordnung 42 ist hingegen als ein geöffneter Ring ausgebildet, der in die umlaufende Ausnehmung 54 der Mitnehmerscheibe 40 axial spielfrei eingesetzt wird. Im Detail umfasst die Kopplungsanordnung 42 einen ersten Abschnitt 50, der einen geöffneten Ringabschnitt definiert. Dabei überspannt der erste Abschnitt 50 einen Winkelbereich von ca. 240°. Der erste Abschnitt 50 weist entlang seines Umfangs drei radial einwärts vorspringende Bereiche 51 auf. Diese sind jeweils an den freien Enden des ersten Abschnitts 50 angeordnet und ein dritter Bereich 51 ist mittig dazwischen positioniert. Die vorstehenden Bereiche 51 bilden Führungsflächen, welche mit dem Grund der Ausnehmung 54 wechselwirken. Das Anordnen der Kopplungsanordnung 42 in der Ausnehmung 54 erfolgt wiederum über ein elastisches Aufweiten des ersten Abschnitts 50, um vorbestimmte Reibungskräfte einzustellen, die aber nach wie vor eine Relativrotation zwischen der Mitnehmerscheibe 40 und der Kopplungsanordnung 42 um die Verlagerungsachse V ermöglichen.

Zur Aufnahme des Endabschnitts 46 des Positionsgeberelements 44 sind in den freien Endbereichen des ersten Abschnitts 50 jeweils sich radial einwärts erstreckende Ausnehmungen 88 ausgebildet, in die der Endabschnitt 46 radial hineinbewegt werden kann. Diese Ausnehmungen 88 bilden jeweils einen zweiten Abschnitt 56 zum Verbinden von Kopplungsanordnung 42 und Positionsgeberelement 44. Prinzipiell reicht dabei eine solche Ausnehmung 88 in nur einem der Endbereiche aus. Optional können die Ausnehmungen 88 beim Koppeln mit dem Positionsgeberelement 44 auch elastisch deformiert werden (zum Beispiel durch ein Aufweiten), um eine sichere Verbindung zu gewährleisten.

Die in Eingriff gebrachte Ausnehmung 88 bildet gemeinsam mit dem Endstück 66 des Positionsgeberelements 44 einen axialen Formschluss, wobei das Endstück 66 wiederum in Anlage mit einer Durchmesserstufe 86 der Mitnehmerscheibe 40 gerät (sh. Fig. 6A). Die axiale Festlegung des Endabschnitts 46 entspricht somit derjenigen des vorigen vierten Ausführungsbeispiels. Eine rotatorische Entkopplung wird hingegen wiederum durch ein relatives Verrutschen des ersten Abschnitts 50 entlang der Ausnehmung 54 ermöglicht.

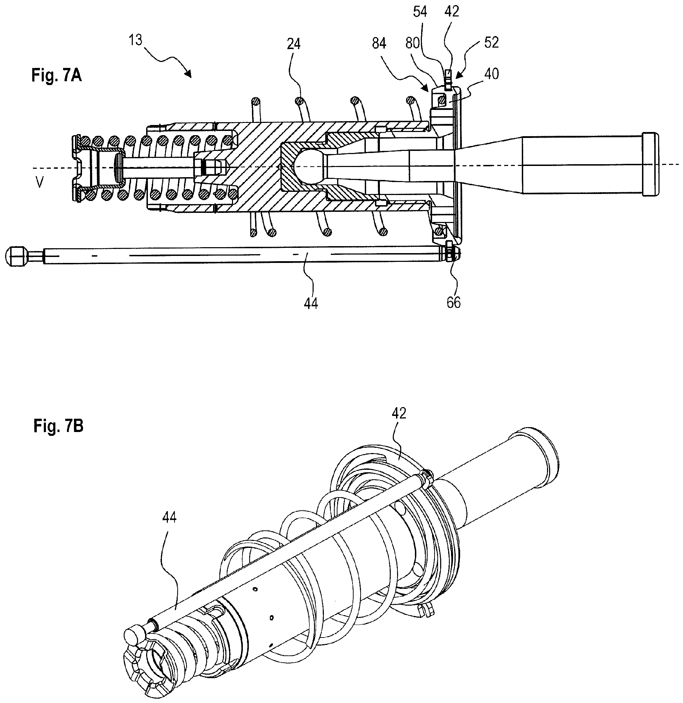

Die Figuren 7A-B zeigen ein sechstes Ausführungsbeispiel. In diesem Fall ist die Kopplungsanordnung 42 analog zu dem fünften Ausgangsbeispiel ausgebildet, weshalb diese nicht näher erläutert wird. Eine Abweichung besteht jedoch dahingehend, dass keine Anlage von dem Endstück 66 des Positionsgeberelements 44 an der Mitnehmerscheibe 40 vorgesehen ist, da dieses radial außerhalb der Mitnehmerscheibe 40 positioniert ist. Die Mitnehmerscheibe 40 selbst ist gegenüber dem sechsten Ausführungsbeispiel mit einem axial verkürzten Ringabschnitt 80 ausgebildet, der jedoch wiederum einen Aufnahmebereich 84 für die Rückstellfeder 24 bereitstellt. Zur Aufnahme der Kopplungsanordnung 42 umfasst die Mitnehmerscheibe 40 wiederum eine Außenumfangsfläche, die eine Kopplungsfläche 52 bildet. In dieser ist eine umlaufende Ausnehmung 54 in Form einer Nut vorgesehen, in der die Kopplungsanordnung 42 analog zu dem vierten Ausführungsbeispiel aufgenommen ist.

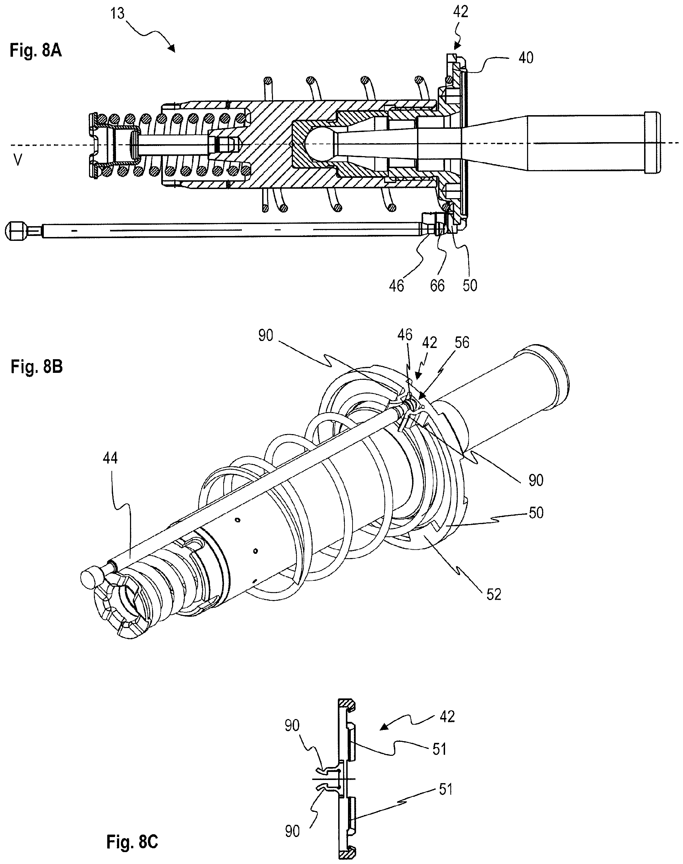

Die Figuren 8A-C zeigen ein siebtes Ausführungsbeispiel. In diesem Fall ist die Kolbenanordnung 13 einschließlich der Mitnehmerscheibe 40 analog zu dem zweiten Ausführungsbeispiel ausgebildet. Gleiches gilt für den ersten Abschnitt 50 der Kopplungsanordnung 42, welche wiederum mit den anhand der Figuren 3A-D erläuterten radial einwärts hervorstehenden Bereichen 51,52 ausgebildet ist. Die Kopplungsanordnung 42 ist, wie vorstehend beschrieben, über diese Bereiche 51,52 axial spielfrei an der Mitnehmerscheibe 40 befestigt.

Die Kopplung mit dem Positionsgeberelement erfolgt über einen zweiten Abschnitt 56, der als ein von dem ersten Abschnitt 50 axial hervorstehender Klemmabschnitt ausgebildet ist. Konkret umfasst der zweite Abschnitt 56 zwei sich axial in Richtung des Positionsgeberelements 44 erstreckende und sich gegenüberliegende Klammerabschnitte 90, die einen Aufnahmebereich für den Endabschnitt 46 des Positionsgeberelements 44 bilden. Dieser Endabschnitt 46 kann unter einem elastischen auseinander Drängen der Klammerabschnitte 90 axial in den zweiten Abschnitt 56 eingeschoben werden. Aufgrund der Durchmesserstufe in dem Endabschnitt 46, welcher analog zu dem zweiten Beispiel ausgebildet ist, verengen sich die Kammerabschnitte 90 jedoch wieder, sobald das Endstück 66 vollständig eingeführt wurde. An ihren axial freien Enden umfassen die Kammerabschnitte 90 jeweils einen Unterschneidungsbereich, der daraufhin mit der Durchmesserstufe in dem Endabschnitt 46 in Eingriff gelangt und ein axialen Formschluss bildet. In Figur 8A erkennt man wiederum, dass das Endstück 66 (optional) mit einer gegenüberliegenden Stirnfläche des ersten Abschnitts 50 der Kopplungsanordnung 42 in Anlage steht.

Bezüglich der weiteren Merkmale und der Funktionsweise des gezeigten Beispiels wird auf die vorstehenden Erläuterungen zu dem zweiten Ausführungsbeispiel verwiesen.

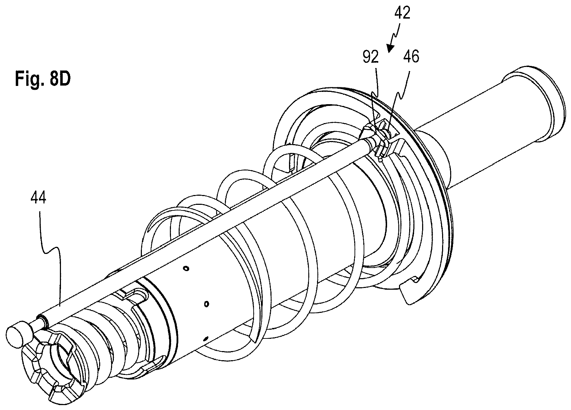

Die Figur 8D zeigt eine weitere Variante des siebten Ausführungsbeispiels. In diesem Fall ist ein zusätzliches Befestigungselement in Form einer Halteklammer 92 bereitgestellt. Diese ist als ein gebogenes Drahtelement ausgebildet und wird auf die axialen Enden der Klammerabschnitte 90 geschoben, um diese zusätzlich aufeinander zu zu drängen. Hierdurch wird eine zusätzliche Befestigungskraft erzeugt, die den Eingriff beziehungsweise Formschluss zwischen dem Endabschnitt 46 und der Kopplungsanordnung 42 sowie die axial starre Kopplung hierzwischen verstärkt.

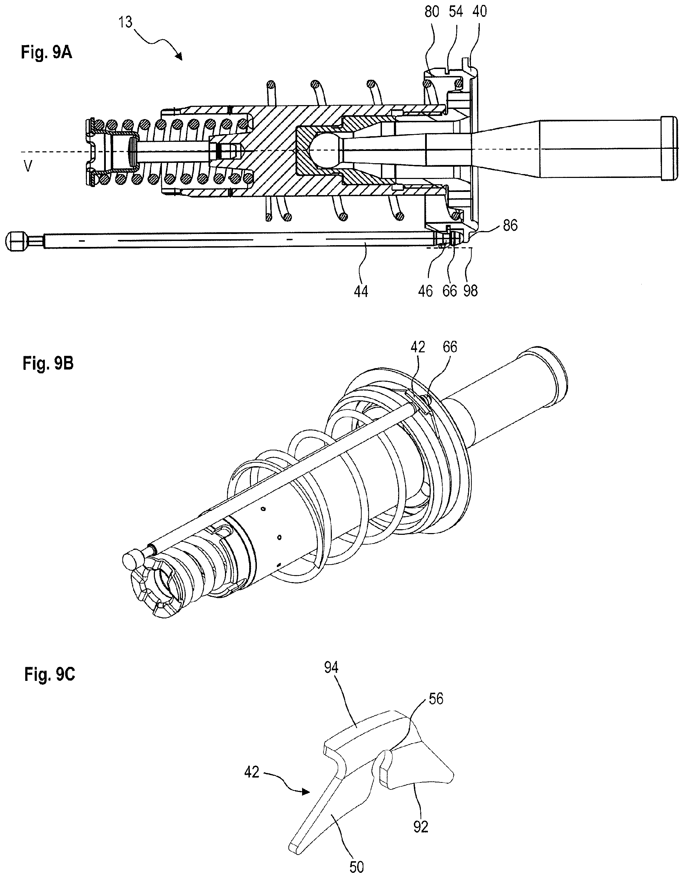

Die Figuren 9A-C zeigen ein achtes Ausführungsbeispiel. In diesem Fall ist die Kolbenanordnung 13 analog zu dem vierten Ausführungsbeispiel gemäß den Figuren 5A-C ausgebildet und weist einen Ringabschnitt 80 sowie eine in Umfangsrichtung umlaufende Ausnehmung 54 auf. In dieser ist wiederum eine Kopplungsanordnung 42 aufgenommen. Diese ist jedoch gegenüber den vorigen Ausgangsbeispielen mit einer deutlich geringeren Baugröße ausgebildet. Konkret ist die Kopplungsanordnung 42 als ein einstückiges Blechbiegeteil ausgebildet, das einen ersten Abschnitt 50 mit einer der Ausnehmung 54 zugewandten abgerundeten Unterseite 92 umfasst. Diese Unterseite 92 stellt eine Führungsfläche bereit, mittels derer die Kopplungsanordnung 42 am Grund der Ausnehmung 54 anliegt und entlang dieser in Umfangsrichtung (und somit um die Verlagerungsachse V) relativ zu der Mitnehmerscheibe 40 bewegbar ist. Die Ausnehmung 54 ist ferner derart bemessen, dass die Kopplungsanordnung 42 axial spielfrei darin aufgenommen wird.

Der zweite Abschnitt 56 der Kopplungsanordnung 42 zur Kopplung mit dem Positionsgeberelement 44 ist als radial einwärts geöffnete Ausnehmung ausgebildet. Der Endabschnitt 46 des Positionsgeberelements 44 ist darin analog zu dem ersten Ausführungsbeispiel unter Bildung eines axialen Formschlusses aufnehmbar. Anschließend wird die Kopplungsanordnung 42 in die Ausnehmung 54 eingesetzt. In Figur 9A erkennt man, dass dies erneut unter einem in Anlage Bringen des Endstücks 66 des Positionsgeberelements 44 mit einer Durchmesserstufe 86 der Mitnehmerscheibe 40 erfolgt.

Die Kopplungsanordnung 42 es wiederum dazu ausgebildet, die Mitnehmerscheibe 40 und das Positionsgeberelement 44 rotatorisch zu entkoppeln, da die Kopplungsanordnung 42 entlang der Ausnehmung 54 abgleiten kann. Um die radiale Position der Kopplungsanordnung 42 zu sichern, umfasst diese ferner einen von der Unterseite 92 abgewandten Kontaktabschnitt 94, der durch einen axial umgebogenen Bereich der Kopplungsanordnung 42 gebildet wird. Dieser Kontaktabschnitt 94 steht in Anlage mit einer in Figur 9A strichliniert angedeuteten Gehäusewand 98 der Hauptbremszylinderanordnung 10. Somit wird eine radiale Relativbewegung zwischen dem Kopplungsabschnitt 42 und der Mitnehmerscheibe 40 und insbesondere ein radiales Herausfallen des Kopplungsabschnitts 42 aus der Ausnehmung 54 verhindert.

Zurückkommend auf Figur 1 erkennt man, dass die Gehäusewand 98 durch ein die Verlagerungsachse V koaxial aufnehmendes hohlzylindrisches Deckelelement 100 gebildet wird. Entsprechend steht der Kontaktabschnitt 94 unabhängig von dessen aktueller Position entlang der Ausnehmung 54 stets in Kontakt mit einem gegenüberliegenden Bereich der Gehäusewand 98, also beispielsweise auch in einer in Figur 9A oberen Position nahe dem Bezugszeichen 54.

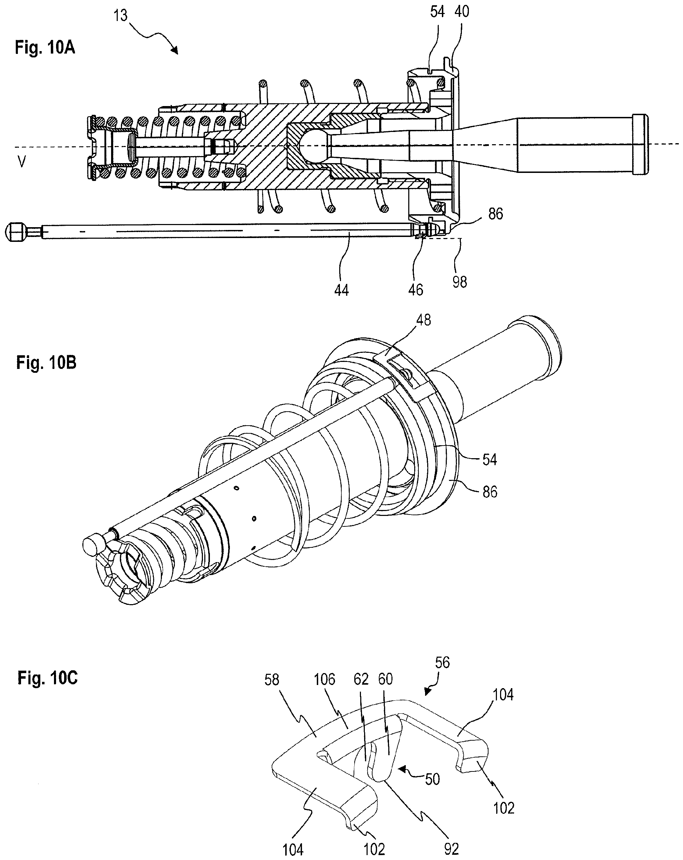

Die Figuren 10A-C zeigen ein neuntes Ausführungsbeispiel. Dieses stellt eine vergleichbare Variante zu dem achten Ausgangsbeispiel dar. Insbesondere ist die Kolbenanordnung 13 einschließlich der Mitnehmerscheibe 40 erneut analog zu dem vierten Ausführungsbeispiel gemäß den Figuren 5A-C ausgebildet.

Die Kopplungsanordnung 42 ist hingegen wiederum mit einer reduzierten Baugröße ausgebildet. In diesem Fall umfasst der erste Abschnitt 50 eine deutlich kürzere Unterseite 92, die in der Ausnehmung 54 axial spielfrei sowie in Umfangsrichtung relatiwerschieblich aufgenommen ist. Der erste Abschnitt 50 geht unmittelbar in einen radialen Teilabschnitt 60 eines zweiten Abschnitts 56 der Kopplungsanordnung 42 über, der analog zu dem ersten Ausführungsbeispiel eine sich radial einwärts öffnende Ausnehmung 62 umfasst. Der zweite Abschnitt 56 umfasst ferner einen axialen Teilabschnitt 58. Dies umfasst zwei abgewinkelte Halteabschnitte 102, die an einer von dem Positionsgeberelement 44 abgewandten Seite der Durchmesserstufe 86 der Mitnehmerscheibe 40 anliegen. Ausgehend von den Haltsabschnitten 102 erstreckt sich jeweils ein axial verlaufender Armabschnitt 104. An ihren von den Halteabschnitten 102 abgewandten Enden sind die Armabschnitte 104 durch einen Umfangsabschnitt 106 verbunden. Hiervon ausgehend erstreckt sich ein wiederum der radiale Teilabschnitt 60 des zweiten Abschnitts 56.

Die axiale Position der Kopplungsanordnung 42 an der Mitnehmerscheibe 13 wird durch den ersten Abschnitt 50 aber unterstützend auch durch die Halteabschnitte 102 gesichert. Insgesamt erfolgt somit erneut eine axial spielfreie sowie axial starre Kopplung von Positionsgeberelement 44 und Kolbenanordnung 13 über die Kopplungsanordnung 42, welche jedoch relativ zu der Mitnehmerscheibe 40 um die Verlagerungsachse V bewegbar ist.

## Patentansprüche

1. Hauptbremszylinderanordnung (10) für eine Kraftfahrzeugbremsanlage, umfassend wenigstens eine Kolbenanordnung (13) mit:
- einer Druckkolbeneinheit, die entlang einer Verlagerungsachse (V) verlagerbar ist und gemeinsam mit einer Gehäuseanordnung (12) eine Druckkammer (28) begrenzt,
- einem Krafteingangsglied (19), das nach Maßgabe einer Bremspedalbetätigung verlagerbar ist und mit der Druckkolbeneinheit für eine gemeinsame Verlagerung gekoppelt oder koppelbar ist,
wobei die Hauptbremszylinderanordnung (10) ferner umfasst:
- ein Positionsgeberelement (44), das nach Maßgabe einer Betätigung des Krafteingangsgliedes (19) verlagerbar ist;
- eine Erfassungseinheit (48), die dazu ausgebildet ist, eine Verlagerung des Positionsgeberelements (44) zu erfassen; und
eine Kopplungsanordnung (42), die dazu ausgebildet ist, das Positionsgeberelement (44) mit wenigstens einem Element der Kolbenanordnung (13) entlang der Verlagerungsachse (V) im Wesentlichen starr zu koppeln, wobei die Kopplungsanordnung (42) ferner dazu eingerichtet ist, eine Rotation der Kolbenanordnung (13) relativ zu dem Positionsgeberelement (44) um die Verlagerungsachse (V) zuzulassen,
wobei die Kopplungsanordnung (42) einen ersten Abschnitt (50) umfasst, der dazu ausgebildet ist, die Kopplungsanordnung (42) mit dem wenigstens einen Element der Kolbenanordnung (13) zu koppeln,
**dadurch gekennzeichnet, dass** der erste Abschnitt (50) dazu ausgebildet ist, mit einer Kopplungsfläche (52) der Kolbenanordnung (13) zu wechselwirken und insbesondere relativ zu dieser abzugleiten,
wobei die Kopplungsfläche (52) in einem Bereich der Kolbenanordnung (13) ausgebildet ist, der einen größeren Durchmesser aufweist als ein die Druckkammer (28) begrenzender Abschnitt der Druckkolbeneinheit.

2. Hauptbremszylinderanordnung (10) nach Anspruch 1,
wobei die Kopplungsfläche (52) an einem Mitnehmerelement (40) ausgebildet ist, das an einem von der Druckkammer (28) abgewandten Endbereich der Kolbenanordnung (13) angeordnet ist.

3. Hauptbremszylinderanordnung (10) nach Anspruch 1 oder 2,
wobei zumindest einer von dem erstem Abschnitt (50) und der Kopplungsfläche (52) mit einer Ausnehmung (54) ausgebildet ist, in die der jeweils andere von erstem Abschnitt (50) und Kopplungsfläche (52) zumindest teilweise aufgenommen ist, und insbesondere, wobei die Ausnehmung (54) eine in Umfangsrichtung verlaufende Nut umfasst.

4. Hauptbremszylinderanordnung (10) nach einem der Ansprüche 1 bis 3,
wobei der erste Abschnitt (50) unter einer elastischen Deformation mit der Kolbenanordnung (13) gekoppelt oder koppelbar ist.

5. Hauptbremszylinderanordnung (10) nach einem der Ansprüche 1 bis 4,
wobei der erste Abschnitt (50) einen ringförmigen Bereich umfasst, der einen Winkelbereich von wenigstens ca. 120° überspannt.

6. Hauptbremszylinderanordnung (10) nach einem der vorangehenden Ansprüche,
wobei die Kopplungsanordnung (42) einen zweiten Abschnitt (56) umfasst, der dazu ausgebildet ist, die Kopplungsanordnung (42) mit dem Positionsgeberelement (44) zu koppeln.

7. Hauptbremszylinderanordnung (10) nach Anspruch 6,
wobei der zweite Abschnitt (56) dazu ausgebildet ist, einen Formschluss mit dem Positionsgeberelement (44) zu bilden, wobei der Formschluss insbesondere eine axiale Relativbewegung von Kopplungsanordnung (42) und Positionsgeberelement (44) begrenzt.

8. Hauptbremszylinderanordnung (10) nach Anspruch 6 oder 7,
wobei der zweite Abschnitt (56) dazu ausgebildet ist, einen Kraftschluss mit dem Positionsgeberelement (44) zu bilden, insbesondere wobei das Positionsgeberelement (44) unter einer zumindest lokalen elastischen Deformation des zweiten Abschnitts (56) mit der Kopplungsanordnung (42) koppelbar ist.

9. Hauptbremszylinderanordnung (10) nach einem der Ansprüche 1 bis 5 und einem der Ansprüche 6 bis 8,
wobei der zweite Abschnitt (56) gegenüber dem ersten Abschnitt (50) axial hervorsteht oder wobei der zweite Abschnitt (56) durch einen Ausnehmungsbereich in dem ersten Abschnitt (50) gebildet wird.

10. Hauptbremszylinderanordnung (10) einem der Ansprüche 6 bis 9,
wobei das Positionsgeberelement (44) gemäß zumindest einer der folgenden Varianten mit dem zweiten Abschnitt (56) koppelbar ist:
- axiales Hineinbewegen in den zweiten Abschnitt (56); und
- radiales Hineinbewegen in den zweiten Abschnitt (56).

11. Hauptbremszylinderanordnung (10) nach einem der Ansprüche 1 bis 10,
wobei das Positionsgeberelement (44) einen Endabschnitt (46) umfasst, der dazu ausgebildet ist, mit dem zweiten Abschnitt (56) der Kopplungsanordnung (42) zu wechselwirken.

12. Hauptbremszylinderanordnung (10) nach Anspruch 11,
wobei der zweite Abschnitt (56) den Endabschnitt (46) zumindest teilweise axial überspannt.

## Claims

1. Brake master cylinder arrangement (10) for a motor vehicle brake system, comprising at least one piston arrangement (13) with:
- a pressure piston unit which can be moved along a movement axis (V) and delimits a pressure chamber (28) together with a housing arrangement (12),
- a force input member (19) which can be moved in accordance with a brake pedal actuation and is coupled or can be coupled to the pressure piston unit for a joint movement,
the brake master cylinder (10) comprising, furthermore:
- a position encoder element (44) which can be moved in accordance with an actuation of the force input member (19) ;
- a detection unit (48) which is configured to detect a movement of the position encoder element (44); and
a coupling arrangement (42) which is configured to couple the position encoder element (44) to at least one element of the piston arrangement (13) in a substantially rigid manner along the movement axis (V), the coupling arrangement (42) being set up, furthermore, to permit a rotation of the piston arrangement (13) relative to the position encoder element (44) about the movement axis (V),
the coupling arrangement (42) comprising a first portion (50) which is configured to couple the coupling arrangement (42) to the at least one element of the piston arrangement (13),
**characterized in that**
the first portion (50) is configured to interact with a coupling face (52) of the piston arrangement (13) and, in particular, to slide relative to the latter,
the coupling face (52) being configured in a region of the piston arrangement (13), which region has a greater diameter than a portion of the pressure piston unit, which portion delimits the pressure chamber (28).

2. Brake master cylinder arrangement (10) according to Claim 1,
the coupling face (52) being configured on a driver element (40) which is arranged on an end region of the piston arrangement (13), which end region faces away from the pressure chamber (28).

3. Brake master cylinder arrangement (10) according to Claim 1 or 2,
at least one of the first portion (50) and the coupling face (52) being configured with a recess (54), in which the respective other one of the first portion (50) and the coupling face (52) is received at least partially, and, in particular, the recess (54) comprising a groove which runs in the circumferential direction.

4. Brake master cylinder arrangement (10) according to one of Claims 1 to 3,
the first portion (50) being coupled or being capable of being coupled to the piston arrangement (13) with an elastic deformation.

5. Brake master cylinder arrangement (10) according to one of Claims 1 to 4,
the first portion (50) comprising an annular region which spans an angular region of at least approximately 120°.

6. Brake master cylinder arrangement (10) according to one of the preceding claims, the coupling arrangement (42) comprising a second portion (56) which is configured to couple the coupling arrangement (42) to the position encoder element (44).

7. Brake master cylinder arrangement (10) according to Claim 6,
the second portion (56) being configured to form a positively locking connection to the position encoder element (44), the positively locking connection limiting, in particular, an axial relative movement of the coupling arrangement (42) and the position encoder element (44).

8. Brake master cylinder arrangement (10) according to Claim 6 or 7,
the second portion (56) being configured to form a non-positive connection to the position encoder element (44), it being possible, in particular, for the position encoder element (44) to be coupled to the coupling arrangement (42) under an at least local elastic deformation of the second portion (56).

9. Brake master cylinder arrangement (10) according to one of Claims 1 to 5 and one of Claims 6 to 8,
the second portion (56) projecting axially with respect to the first portion (50), or the second portion (56) being formed by way of a recess region in the first portion (50).

10. Brake master cylinder arrangement (10) according to one of Claims 6 to 9,
it being possible for the position encoder element (44) to be coupled to the second portion (56) in accordance with at least one of the following variants:
- axial movement into the second portion (56); and
- radial movement into the second portion (56).

11. Brake master cylinder arrangement (10) according to one of Claims 1 to 10,
the position encoder element (44) comprising an end portion (46) which is configured to interact with the second portion (56) of the coupling arrangement (42).

12. Brake master cylinder arrangement (10) according to Claim 11,
the second portion (56) spanning the end portion (46) axially at least partially.

## Revendications

1. Agencement de maître-cylindre de frein (10) pour une installation de freinage de véhicule automobile, comprenant au moins un agencement de piston (13) comprenant :
- une unité de piston de pression qui peut être déplacée le long d'un axe de déplacement (V) et qui limite conjointement avec un agencement de boîtier (12) une chambre de pression (28),
- un organe d'entrée de force (19) qui peut être déplacé en fonction d'un actionnement d'une pédale de frein et qui est ou peut être accouplé à l'unité de piston de pression en vue d'un déplacement conjoint,
l'agencement de maître-cylindre de frein (10) comprenant en outre :
- un élément de détecteur de position (44) qui peut être déplacé en fonction d'un actionnement de l'organe d'entrée de force (19) ;
- une unité de détection (48) qui est réalisée de manière à détecter un déplacement de l'élément de détecteur de position (44) ; et
un agencement d'accouplement (42) qui est réalisé de manière à accoupler essentiellement rigidement l'élément de détecteur de position (44) à au moins un élément de l'agencement de piston (13) le long de l'axe de déplacement (V), l'agencement d'accouplement (42) étant en outre prévu pour permettre une rotation de l'agencement de piston (13) autour de l'axe de déplacement (V) par rapport à l'élément de détecteur de position (44), l'agencement d'accouplement (42) comprenant une première portion (50) qui est réalisée de manière à accoupler l'agencement d'accouplement (42) à l'au moins un élément de l'agencement de piston (13),
**caractérisé en ce que** la première portion (50) est réalisée de manière à interagir avec une surface d'accouplement (52) de l'agencement de piston (13) et en particulier à glisser par rapport à celle-ci,
la surface d'accouplement (52) étant réalisée dans une région de l'agencement de piston (13) qui présente un plus grand diamètre qu'une portion de l'unité de piston de pression limitant la chambre de pression (28).

2. Agencement de maître-cylindre de frein (10) selon la revendication 1, dans lequel la surface d'accouplement (52) est réalisée au niveau d'un élément d'entraînement (40) qui est disposé au niveau d'une région d'extrémité de l'agencement de piston (13) opposée à la chambre de pression (28).

3. Agencement de maître-cylindre de frein (10) selon la revendication 1 ou 2, dans lequel au moins l'une parmi la première portion (50) et la surface d'accouplement (52) est réalisée avec un évidement (54) dans lequel est reçue au moins en partie l'autre respective parmi la première portion (50) et la surface d'accouplement (52), et en particulier dans lequel l'évidement (54) comprend une rainure s'étendant dans la direction périphérique.

4. Agencement de maître-cylindre de frein (10) selon l'une quelconque des revendications 1 à 3, dans lequel la première portion (50) est ou peut être accouplée par déformation élastique avec l'agencement de piston (13).

5. Agencement de maître-cylindre de frein (10) selon l'une quelconque des revendications 1 à 4, dans lequel la première portion (50) comprend une région de forme annulaire qui couvre une plage angulaire d'au moins environ 120°.

6. Agencement de maître-cylindre de frein (10) selon l'une quelconque des revendications précédentes, dans lequel l'agencement d'accouplement (42) comprend une deuxième portion (56) qui est réalisée de manière à accoupler l'agencement d'accouplement (42) à l'élément de détecteur de position (44) .

7. Agencement de maître-cylindre de frein (10) selon la revendication 6, dans lequel la deuxième portion (56) est réalisée de manière à former un engagement par correspondance de formes avec l'élément de détecteur de position (44), l'engagement par correspondance de formes limitant notamment un déplacement relatif axial de l'agencement d'accouplement (42) et de l'élément de détecteur de position (44).

8. Agencement de maître-cylindre de frein (10) selon la revendication 6 ou 7, dans lequel la deuxième portion (56) est réalisée de manière à former un engagement par force avec l'élément de détecteur de position (44), en particulier dans lequel l'élément de détecteur de position (44) peut être accouplé à l'agencement d'accouplement (42) avec déformation élastique au moins locale de la deuxième portion (56).

9. Agencement de maître-cylindre de frein (10) selon l'une quelconque des revendications 1 à 5 et l'une quelconque des revendications 6 à 8, dans lequel la deuxième portion (56) fait saillie axialement par rapport à la première portion (50), ou dans lequel la deuxième portion (56) est formée par une région d'évidement dans la première portion (50).

10. Agencement de maître-cylindre de frein (10) selon l'une quelconque des revendications 6 à 9, dans lequel l'élément de détecteur de position (44) peut être accouplé à la deuxième portion (56) selon au moins l'une des variantes suivantes :
- déplacement axial vers l'intérieur dans la deuxième portion (56) ; et
- déplacement radial vers l'intérieur dans la deuxième portion (56).

11. Agencement de maître-cylindre de frein (10) selon l'une quelconque des revendications 1 à 10, dans lequel l'élément de détecteur de position (44) comprend une portion d'extrémité (46) qui est réalisée de manière à interagir avec la deuxième portion (56) de l'agencement d'accouplement (42).

12. Agencement de maître-cylindre de frein (10) selon la revendication 11, dans lequel la deuxième portion (56) couvre au moins en partie axialement la portion d'extrémité (46).
